(19) Europäisches Patentamt European Patent Office Office européen des brevets

(11) **EP 2 421 912 B1**

(12) **EUROPEAN PATENT SPECIFICATION**

(45) Date of publication and mention of the grant of the patent:
**11.07.2018 Bulletin 2018/28**

(21) Application number: **10766553.1**

(22) Date of filing: **23.04.2010**

(51) Int Cl.:
**C08H 8/00** *(2010.01)*    **B01D 36/00** *(2006.01)*

(86) International application number:
**PCT/CA2010/000582**

(87) International publication number:
**WO 2010/121367 (28.10.2010 Gazette 2010/43)**

(54) **FRACTIONATION OF BIOMASS FOR CELLULOSIC ETHANOL AND CHEMICAL PRODUCTION**

FRAKTIONIERUNG VON BIOMASSE FÜR ZELLULOSE-ETHANOL UND ZUR HERSTELLUNG VON CHEMIKALIEN

FRACTIONNEMENT D'UNE BIOMASSE POUR LA PRODUCTION D'ÉTHANOL CELLULOSIQUE ET AUTRES PRODUITS CHIMIQUES

(84) Designated Contracting States:
**AT BE BG CH CY CZ DE DK EE ES FI FR GB GR HR HU IE IS IT LI LT LU LV MC MK MT NL NO PL PT RO SE SI SK SM TR**

(30) Priority: **23.04.2009 US 171997 P**
**23.04.2009 US 172057 P**

(43) Date of publication of application:
**29.02.2012 Bulletin 2012/09**

(73) Proprietor: **Greenfield Ethanol Inc.**
**Toronto, Ontario M5C 2B8 (CA)**

(72) Inventors:
• **DOTTORI, Frank, A.**
**Temiscaming**
**Québec J0Z 3R0 (CA)**
• **BENSON , Robert , Ashley , Cooper**
**North Bay**
**Ontario P1A 3Y1 (CA)**
• **BENECH, Régis-Olivier**
**Chatham**
**Ontario N7M 5J5 (CA)**

(74) Representative: **Tombling, Adrian George et al**
**Withers & Rogers LLP**
**4 More London Riverside**
**London SE1 2AU (GB)**

(56) References cited:
| | |
|---|---|
| **WO-A1-00/61276** | **WO-A1-02/14598** |
| **WO-A1-2006/032282** | **WO-A2-00/78446** |
| **WO-A2-2009/090480** | **CA-A1- 2 615 844** |
| **CA-A1- 2 678 976** | **CA-A1- 2 685 177** |
| **US-A- 3 212 932** | **US-A- 4 461 648** |

Remarks:
The file contains technical information submitted after the application was filed and not included in this specification

**Description**

**FIELD OF THE INVENTION**

The present invention generally relates to the production of ethanol from lignocellulosic biomass and in particular to a process for extracting cellulose and hemicellulose from corncobs, and a process for extracting cellulose and hemicellulose fractions from low lignin containing biomass.

**BACKGROUND OF THE INVENTION**

Concerns over high oil prices, security of supply and global warming have raised the demand for renewable energy. Renewable energy is energy produced from plant derived biomass. Renewable energy applications such as fuel ethanol are seen as a valuable contribution to the reduction in fossil fuel consumption. Public policies have supported the creation of a fuel ethanol industry largely based on the use of corn as a feedstock. The production of fuel ethanol helps to stabilize farm income and reduces farm subsidies. However, as demand increases for fuel ethanol, additional feedstocks such as lignocellulosic biomass are under consideration.

Fuel ethanol is created by the fermentation of starch derived sugars. The ethanol is distilled and dehydrated to create a high-octane, water-free gasoline substitute. Fuel ethanol is blended with gasoline to produce a hybrid fuel, which has environmental advantages when compared to gasoline alone, and can be used in gasoline-powered vehicles manufactured since the 1980's. Most gasoline-powered vehicles can run on a blend consisting of gasoline and up to 10 percent ethanol, known as "E-10".

While corn is the major raw material for producing ethanol in North America, it is already apparent that large-scale use of ethanol for fuel will require new technologies that will allow the industry to expand its feedstock options to include cellulose.

Cellulosic ethanol is manufactured from lignocellulosic biomass. Lignocellulosic biomass may be grouped into four main categories: (1) wood residues (including sawmill and paper mill discards), (2) municipal paper waste, (3) agricultural wastes (including corn stover, corn cobs and sugarcane bagasse), and (4) dedicated energy crops which are mostly composed of fast growing tall, woody grasses such as switch grass and Miscanthus.

Lignocellulosic biomass is composed of three primary polymers that make up plant cell walls: Cellulose, hemicellulose and lignin. Cellulose is a polymer of D-glucose. Hemicellulose contains two different polymers i.e. xylan, a polymer of xylose and glucomannan, a polymer of glucose and mannose. Lignin is a polymer of guaiacylpropane- and syringylpropane units.

Cellulose fibers are locked into a rigid structure of hemicellulose and lignin. Lignin and hemicelluloses form chemically linked complexes that bind water soluble hemicelluloses into a three dimensional array, cemented together by lignin. Lignin covers the cellulose microfibrils and protects them from enzymatic and chemical degradation. These polymers provide plant cell walls with strength and resistance to degradation, which makes lignocellulosic biomass a challenge to use as a substrate for biofuel production. Variation in the content or organization of these polymers significantly affects the overall steps of cellulosic ethanol production.

Cellulose or $\beta$-1-4-glucan is a linear polysaccharide polymer of glucose made of cellobiose units. The cellulose chains are packed by hydrogen bonds into microfibrils. These fibrils are attached to each other by hemicelluloses, amorphous polymers of different sugars and are covered by lignin.

Hemicellulose is a physical barrier which surrounds the cellulose fibers and protects cellulose against degradation. There is evidence that hemicellulose, containing xylose polymers (xylan), limits the activity of cellulolytic enzymes, thereby lowering cellulose to glucose conversion rates. Thus for the production of fermentable sugars and ethanol, it is desirable to submit to the enzymatic hydrolysis a highly reactive cellulose low in xylan.

Lignin is a very complex molecule constructed of phenylpropane units linked in a three dimensional structure which is particularly difficult to biodegrade. Lignin is the most recalcitrant component of the plant cell wall. There are chemical bonds between lignin, hemicellulose and cellulose polymers. There is evidence that the higher the proportion of lignin, the higher the resistance to chemical and biological hydrolysis. Lignin and some soluble lignin derivatives inhibit enzymatic hydrolysis and fermentation processes. Thus, it is desirable to use a lignocellulosic feedstock which is low in lignin.

Published work on the various processes for the production of fermentable sugars from cellulosic biomass shows the existence of an inverse relationship between lignin content and the efficiency of enzymatic hydrolysis of sugar based polymers. Lignocellulosic microfibrils are associated in the form of macrofibrils. This complicated structure and the presence of lignin provide plant cell walls with strength and resistance to degradation, which also makes these materials a challenge to use as substrates for the production of biofuel and bioproducts. Thus, pretreatment is necessary to produce highly reactive cellulose reacting well with catalysts such as enzymes.

Purified cellulose and lignin-free xylo-oligosaccharides are valuable for many purposes. Specifically, reactive cellulose extracted from biomass with low lignin content may be easily hydrolyzed to fermentable sugar monomers and then fermented to ethanol and other biofuels. Lignin-free xylo-oligosaccharides extracted from the hemicellulose fraction are valuable and may be easily used in the preparation of prebiotic substances for food and pharmaceutical applications.

The best method and conditions of pretreatment will vary and depend greatly on the type of lignocellulosic starting material used. Pretreatment configuration and operating conditions must be adjusted with respect to the content or organization of lignocellulosic polymers in the starting material, to attain optimal conversion of cellulose to fermentable sugars. The cellulose-to-lignin ratio is the main factor. Other parameters to consider are the content of hemicellulose, degree of acetylation of hemicellulose, cellulose-accessible surface area, degree of polymerization and crystallinity.

The lignin content of corncobs and certain hybrids of Miscanthus for example, is low i.e. 5% to 10%. Corncobs and some hybrids of Miscanthus are good candidates for the production of cellulosic ethanol due to their favorable ratios of cellulose: lignin:hemicellulose. Corncobs and Miscanthus have ratios of 8:1:7 and 5:1:2, respectively.

An effective pretreatment should meet the following requirements: (a) production of reactive cellulosic fiber for enzymatic attack, (b) avoidance of cellulose and hemicelluloses destruction, and (c) avoidance of the formation of possible inhibitors for hydrolytic enzymes and fermenting microorganisms.

Several methods have been investigated for the pretreatment of lignocellulosic materials to produce reactive cellulose. These methods are classified into physical pretreatments, biological pretreatments and physicochemical pretreatments.

The prior art teaches that physical and biological pretreatments are not suitable for industrial applications. Physical methods such as milling, irradiation and extrusion are highly energy demanding and produce low grade cellulose. Also, the rates of known biological treatments are very low.

Pretreatments that combine both chemical and physical processes are referred to as physicochemical processes. These methods are among the most effective and include the most promising processes for industrial applications. Hemicellulose hydrolysis and lignin removal are often nearly complete. Increase in cellulose surface area, decrease in cellulose degree of polymerization and crystallinity greatly increase overall cellulose reactivity. Treatment rates are usually rapid. These pretreatment methods usually employ hydrolytic techniques using acids (hemicellulose hydrolysis) and alkalis for lignin removal.

The steam explosion process is well documented. Batch and continuous processes have been tested at laboratory and pilot scale by several research groups and companies. In steam explosion pretreatment, biomass is treated at high pressure, and high temperatures under acidic conditions i.e. 160 °C to 260 °C for 1 min to 20 min, at pH values < pH 4.0. The pressure of the pretreated biomass is suddenly reduced, which makes the materials undergo an explosive decompression leading to defibrization of the lignocellulosic fibers.

Steam explosion pretreatment is not very effective in dissolving lignin, but it does disrupt the lignin structure and increases the cellulose susceptibility to enzymatic hydrolysis. Steam explosion pretreatment generally results in extensive hemicellulose breakdown and, to a certain extent, to the degradation of xylose and glucose.

Steam explosion pretreatment has been successfully applied on a wide range of lignocellulosic biomasses. Acetic acid, sulfuric acid or sulfur dioxide are the most commonly used catalysts.

In the autohydrolysis process, no added acid is required to reach pH values below 4.0. Acetic acid is released during the breakdown of acetylated hemicellulose resulting from the high pressure steam applied to the biomass during the cooking stage. The degree of hemicellulose acetylation is variable among different sources of biomass. The hemicellulose content of corncobs is high. Much of the hemicellulose is acetylated, which means the breakdown and solubilization of the hemicellulose, which occurs during pretreatment, leads to the formation of acetic acid.

The pretreatment of biomass like Miscanthus which does not have a high degree of acetylation requires the addition of acid prior to the steam heating process to achieve a degree of hemicellulose hydrolysis similar to the autohydrolysis pretreatment process for highly acetylated biomass. Dilute acid- or sulfur dioxide-catalyzed steam explosion pretreatments require the use of 0.1-4.0 % sulfuric acid or 0.5-4.0 % sulfur dioxide.

The presence of acetic acid reduces the need for acid catalysts, which is beneficial to the pretreatment process. However, mineral acids, acetic acid and other carboxylic acids are all powerful inhibitors of both the hydrolysis and the glucose fermentation process. Mineral and carboxylic acids may remain in the pretreated biomass and carry through to the hydrolysis and fermentation steps. A process is desired that includes a pretreatment step carried out at a pH values < pH 4.0 to maximize hemicellulose solubilization. However, after steam pretreatment, acid catalysts and pre-treatment degradation products must be removed to enhance the digestibility of the cellulose in the enzymatic hydrolysis step and to enable a more rapid and complete conversion of glucose to ethanol in the fermentation step.

WO02/14598 relates to cellulose production from lignocellulosic biomass. However it does not disclose a Severity Index or collection of acetic acid in accordance with the present claims.

## SUMMARY OF THE INVENTION

It is now an object of the present invention to provide a process which overcomes at least one of the above disadvantages.

The inventors have discovered that the catalytic activities of cellulolytic enzymes are specifically inhibited by soluble forms of hemicellulose i.e. soluble xylo-oligosaccharides and xylose. Thus products of hemicellulose decomposition released during biomass pretreatment which remain in the pretreated biomass, and carry through to the hydrolysis and fermentation steps, can negatively affect enzymatic conversion of cellulose to glucose.

As is apparent from the above discussion of known approaches, improving the overall ethanol yield and reducing enzyme usage or hydrolysis time are generally linked to increased operating costs. The increased costs may outweigh the value of the increased ethanol yield, rendering existing methods economically unacceptable.

The inventors have discovered that complete removal of the inhibitory compounds is neither required nor desirable for the achievement of the most economically viable pretreatment process. The inventors have identified a narrow range of extraction conditions for the removal of inhibitory compounds in which hemicelluloses and hemicellulose hydrolysis and degradation products and other inhibitors are still present, but reduced to a level where they have a much reduced inhibitory effect on the enzymes. In addition, the fractionation of the biomass still provides an economical amount of valuable hemicellulose. The extraction is achieved with a lower volume of diluent and level of dilution making the process much more cost effective. In effect, the extraction cost is significantly less than the value of the increased ethanol yield, lower enzyme dosages, and the reduced processing times achieved. When combined with the ideal pretreatment temperature, time and purging of impurities, an economical process to convert low lignin lignocellulosic biomasses to fermentable sugar is achieved.

In addition, the economics of ethanol production demand the maximization of the value in all the byproduct streams from the process. As an example, acetic acid may be recovered for sale as an industrial chemical. Also, xylo-oligosaccharides, (non digestible sugar oligomers made up of xylose units), have beneficial health properties; particularly their prebiotic activity. This makes them good candidates as high value added bioproducts. The xylo-oligosaccharides mixture derived from corncob autohydrolysis exhibits prebiotic potential similar to commercially available xylo-oligosaccharide products.

A novel process is described for the continuous steam explosion pretreatment of corncobs wherein no mineral acid is added and the amount of acetic acid released in the pretreatment step is controlled to maximize the efficiency of the steam exposing step.

A sufficient residence time is provided to ensure proper breakdown/hydrolysis of the hemicellulose and activation of the cellulose fraction.

The steam explosion pretreated corncob biomass is extracted under pressure prior to exiting the pretreatment reactor. Minimal water is used as an eluent to remove water soluble hemicellulose and cellulose degradation products such as, xylose, xylo-oligosaccharides, furans, fatty acids, sterols, ester, ethers and acetic acid.

The inventors have discovered that complete removal of the inhibitory compounds is neither required nor desirable for the achievement of the most economically viable pretreatment process. The inventors have identified a narrow range of extraction conditions for the removal of inhibitory compounds in which hemicelluloses and hemicellulose hydrolysis and degradation products and other inhibitors are still present, but reduced to a level where they have a much reduced inhibitory effect on the enzymes. In addition, the fractionation of the biomass still provides an economical amount of valuable hemicellulose. The extraction is achieved with a lower volume of eluent and level of dilution making the process much more cost effective. In effect, the extraction cost is significantly less than the value of the increased ethanol yield, lower enzyme dosages, and the reduced processing times achieved. When combined with the ideal pretreatment temperature, time and purging of impurities, an economical process to convert corn cobs to fermentable sugar is achieved.

In addition, the economics of ethanol production from hemicellulose demand the maximization of the value in all the byproduct streams from the process. As an example, acetic acid may be recovered for sale as an industrial chemical. Extraction refers in general to a single or multiple step process of removing liquid portions from the fibers with or without addition or utilization of an eluent, (the diluting step) Typically the extraction is enhanced by use of a mechanical compressing device such as a modular screw device. The eluent can be recycled to increase the economy of its use or used for example in the known process of counter current washing as an example. Liquefied components in the steam treated lignocellulosic biomass and the dissolved components are subsequently removed from the fibrous solids. Generally this removes most of the dissolved compounds, the wash water, primarily consisting of hemicellulose hydrolysis and degradation products that are inhibitory to downstream hydrolysis and fermentation steps.

The extracting system in general uses a device that employs a mechanical pressing or other means to separate solids from liquid or air from solids. This can be accomplished under pressure as described above and/or under atmospheric pressure accomplished with several different types of machines that vary and the detail of which is not essential to this invention.

The extract stream containing the xylo-oligosaccharide fraction is collected and concentrated to the desired dryness for further applications. A final refining step is required for producing xylo-oligosaccharides with a degree of purity suitable for pharmaceuticals, food and feed, and agricultural applications. Vacuum evaporation can be applied in order to increase the concentration and simultaneously remove volatile compounds such as acetic acid and flavors or their precursors. Solvent extraction, adsorption and ion-exchange precipitation have been proposed by those skilled in the art.

A balance must be maintained between the removal of the water soluble components (xylo-oligosaccharide fraction) and the need to minimize the amount of washing/eluent water added. It is the desire to minimize water use, as the xylo-oligosaccharide fraction must be concentrated for its eventual use, which requires equipment and energy, both of which must be minimized.

In the new process, pressurized activated cellulose is flashed into a cyclone by rapidly releasing the pressure to ensure an explosive decompression of the pretreated biomass into fibrous solids and vapors. This opens up the fibres to increase accessibility for the enzymes. Purified cellulose with a low level of residual hemicellulose can be sent to the hydrolysis and fermentation stages.

In particular, the present invention relates to a novel process for the continuous steam explosion pretreatment of low lignin biomass (< 12 %) wherein the recovery of both cellulose and hemicellulose is maximized by carefully choosing pH, temperature, and retention time of the exposing step in accordance with the present claims.

The biomass is preferably chopped or ground and preheated with live steam at atmospheric pressure prior to the pretreatment step. Air is removed from the biomass by pressing. Liquefied inhibiting extracts can be removed at this time. Acid is added, if required, to lower the pH to the desired value for catalyzing the breakdown/hydrolysis of the hemicellulose and activating the cellulose fraction during the cooking step. Pressed impregnated biomass is then cooked with steam at elevated temperatures and pressures for a preselected amount of time.

A sufficient residence time is provided to ensure proper breakdown/hydrolysis of the hemicellulose and activation of the cellulose fraction. During pretreatment purging of condensate and venting of volatiles occurs continuously.

The pretreated biomass is extracted under pressure prior to exiting the pretreatment reactor or after exiting or both. Minimal water is used as an eluent to remove water soluble or water emulsified hemicellulose and cellulose hydrolysis and degradation products such as, xylose, xylo-oligosaccharides, furans, fatty acids, sterols, ester, ethers and acetic acid.

Extraction refers in general to a single or multiple step process of removing liquid portions from the fibers with or without addition or utilization of an eluent, (the diluting step). Typically the extraction is enhanced by use of a mechanical compressing device such as a modular screw device. The eluent can be recycled to increase the economy of its use or used for example in the known process of counter current washing. Soluble and suspended or emulsified components in the steam treated lignocellulosic biomass are removed from the fibrous solids. The subsequent eluent wash water, containing hemicellulose products that are inhibitory to downstream hydrolysis and fermentation steps is sent to a recovery step.

The extracting system generally uses a device that employs mechanical pressing or other means to separate solids from liquid. This can be accomplished under pressure as described above and/or under atmospheric pressure accomplished with several different types of machines, the details of which are not essential to this invention.

The extract stream containing the xylo-oligosaccharide fraction is collected and concentrated to the desired dryness for further applications. A final refining step is required for producing xylo-oligosaccharides with a degree of purity suitable for pharmaceuticals, food and feed, and agricultural applications. Vacuum evaporation can be applied in order to increase the concentration and simultaneously remove volatile compounds such as acetic acid and flavors or their precursors. Solvent extraction, adsorption and ion-exchange precipitation have been proposed by those skilled in the art.

A balance must be maintained between the removal of the water soluble components (xylo-oligosaccharide fraction) and the need to minimize the amount of washing/eluent water added. It is desirable to minimize water use, as the xylo-oligosaccharide fraction must eventually be concentrated.

In the new process, pressurized activated cellulose is flashed into a cyclone by rapidly releasing the pressure to ensure an explosive decompression of the pretreated biomass into fibrous solids and vapors. This opens up the fibres to increase accessibility for the enzymes. Purified cellulose with a low level of residual hemicellulose can be sent to the hydrolysis and fermentation stages.

## BRIEF DESCRIPTION OF THE DRAWINGS

Other objects and advantages of the invention will become apparent upon reading the detailed description and upon referring to the drawings in which:

Figure 1 shows a process diagram of the continuous pretreatment unit proposed in the example.
Figure 2 shows the total percentage recovery of cellulose and hemicellulose produced during the fractionation of corncobs.
Figure 3 illustrates the susceptibility of pretreated corncob cellulose to enzymatic hydrolysis i.e. cellulose to glucose conversion.

Figure 4 shows hydrolysis and fermentation results using pretreated corncobs produced at pilot scale (2.5 metric tonnes, 17 % consistency).

Figure 5 is a process diagram of the continuous steam explosion fractionation system used to produce activated cellulose and lignin free solutions of oligosaccharides. utilizing acid addition.

Figure 6 shows the impact on pretreated biomass pH of sulfuric acid added in conjunction with the acetic acid released from hemicellulose breakdown during steam explosion pretreatment.

Figure 7 shows the total percentage recovery of cellulose and hemicellulose produced during high pressure fractionation of corncobs.

Figure 8 shows the total percentage recovery of cellulose and hemicellulose produced during low pressure fractionation of corncobs.

Figure 9 shows hydrolysis and fermentation results using pretreated corncobs produced at pilot scale and low pressure.

Figure 10 shows the total percentage recovery of cellulose and hemicellulose in solid and liquid fractions produced over the fractionation of Miscanthus.

Figure 11 illustrates the susceptibility of pretreated cellulose from Miscanthus (Example 3) to enzymatic hydrolysis (cellulose to glucose conversion) and fermentability of hydrolyzed cellulose (glucose to ethanol conversion).

Figure 12 shows cellulose conversion times at various levels of digestion versus severity index for Miscanthus Biomass with 1.6% sulfuric acid to a pH of 3.8.

## DETAILED DESCRIPTION OF THE PREFERRED EMBODIMENTS

Before explaining the present invention in detail, it is to be understood that the invention is not limited to the preferred embodiments contained herein. The invention is capable of other embodiments and of being practiced or carried out in a variety of ways. It is to be understood that the phraseology and terminology employed herein are for the purpose of description and not of limitation.

The abbreviations used in the figures have the following meaning:

°C, temperature in degree Celsius
ms, millisecond
DM, Dry matter
SI, Severity Index
$t_{90\%}$, Time to reach 90 % of the maximum theoretical cellulose to glucose conversion.

### Pretreatment of Lignocellulosic Biomass

This invention is a new process for fractionating lignocellulosic biomass from corncobs into two main components, specifically a cellulose-rich corncob fibre and a xylo-oligosaccharides-rich solution. The cellulose-rich component is valuable for many purposes. Specifically it may be more easily hydrolyzed to glucose which in turn may be more easily fermented to ethanol or other biofuels than in previous processes.

The invention particularly relates to a continuous process for the pretreatment of corncobs that generates highly reactive cellulose prehydrolysate with a reduced content of compounds which have an inhibiting effect on cellulose hydrolysis and glucose fermentation.

One disclosed aspect of the invention particularly relates to a process for the pretreatment of corncobs, for generating a lignin free solution of xylo-oligosaccharides with a ratio of xylo-oligosaccharide to acetic acid and volatile compounds from hemicellulose degradation of greater than 4.

The preferred process of the invention includes the steps of exposing ground, preheated corncob biomass to steam at 170 °C to 220 °C at 100 to 322 psig for 2 to 300 minutes without the use of mineral acid catalysts. The pretreatment preferably includes the continuous purging of volatile and liquid compounds. The exposing step steam treats the biomass to a temperature and hold time for a Severity Index of 3.5 to 4.0, the Severity Index being calculated according to the equation:

$$\text{Log Severity Index} = \text{Log} [\text{Exp} \{(\text{Temperature } °C - 100)/14.75\} \times \text{Retention Time (min)}].$$

The exposing step most preferably has a severity index of 4.0.

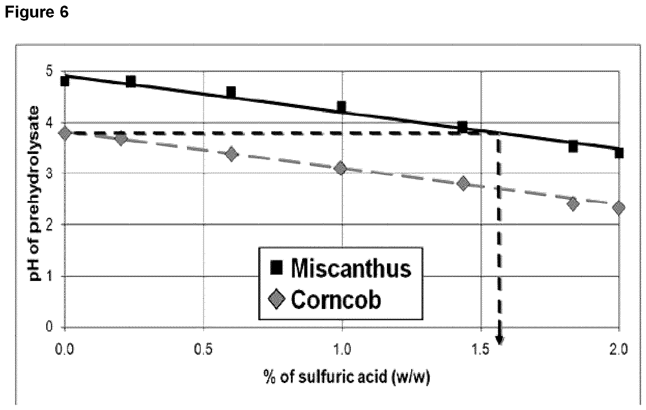

As shown in figure 6 the exposing of corn cobs to a severity index of 4.0 leads to a final pH of 3.5 to 4.0.

The process also includes extraction of the steam treated fibres with/or without eluent addition under pressure to remove water soluble hemicelluloses, acids and hemicellulose and cellulose degradation products. As an option these inhibitors may be extracted after pretreatment or both during and after. The extraction of the soluble biomass from the fiber preferably results in 4% to 10% xylose based sugars consisting of monomers and oligosaccharides remaining in the prehydrolysis fibers.

The extracted fibers, also referred to as prehydrolysate, are separated from the gaseous reaction products in a cyclone separator, collected at the bottom of the separator, then shredded and diluted to the desired consistency and subsequently transported to the enzymatic hydrolysis step.

The prehydrolysate is diluted with water to 10-30% consistency and then reacted with cellulase enzymes to produce glucose. The glucose rich solution is readily utilized in the subsequent fermentation step where an organism converts the glucose into ethanol.

## EXAMPLE

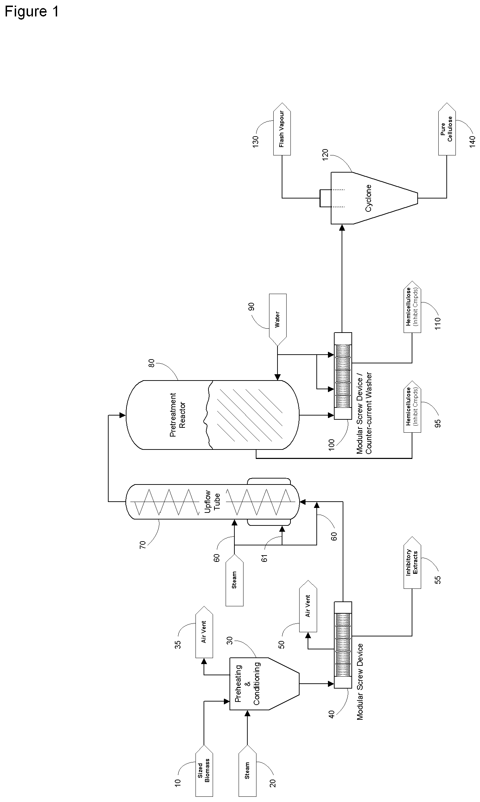

In the following example, reference numbers refer to features of the pretreatment system and process streams, as shown in Figure 1.

Continuous steam explosion pretreatment of corncobs is carried out in a steam explosion pretreatment system.

Corncobs 10 are received, stored, cleaned, ground (0.5 to 1 cm$^3$ particle size) and fed through a V shaped hopper and screw auger (not shown). The corncob moisture is adjusted to 50 % DM.

Prepared corncobs are preheated with live steam 20 at atmospheric pressure, in a holding bin or preheating and conditioning container 30 to a temperature of about 95 °C for about 10-60 minutes. Air and steam are vented through an air vent 35 from the preheating and conditioning container 30.

Preheated corncobs are compressed in a first modular screw device 40 to remove air 50 through an air vent and inhibitory extracts 5. The corncobs are then fed into a pressurized upflow tube 70.

Pressurized saturated steam at a temperature of 205 C is injected upstream of and/or into the upflow tube 70 by direct injection 60 and/or indirect injection of steam 61 in a jacketed section of the up flow tube until the desired cooking pressure is reached.

Corncobs are moved through the upflow tube with the aid of a screw conveyor/mixer (3 min) and are discharged into a pretreatment reactor 80.

Corncobs are continuously discharged from the pretreatment reactor 80 to a second pressurized modular screw device 100 after a residence time of 5 min at 205 °C in the pretreatment reactor 80.

During the residence time, condensate and cooking liquids collected at the bottom of the pretreatment reactor are purged through a purge discharge control valve 95.

Pretreated corncobs are washed with water eluent under pretreatment pressure. Hot water 90 is added to dilute the pretreated corncobs as the fiber is discharged from the pretreatment reactor. Further hot water is also added along the pressing device 100 to reach a ratio of about 6:1 wash water eluent to corncobs and achieve a greater extraction of hemicellulose. The extracted hemicellulose solution 110 is collected and concentrated to the desired dryness for further applications.

The pressurized washed corncobs are flashed into a cyclone 120. The solids, i.e. purified cellulose, collected at the bottom of the cyclone separator are subjected to further processing i.e. shredded and then diluted with fresh water to the desired consistency for hydrolysis and fermentation.

The gaseous components are collected, condensed 130 and fed to a condensate tank. Any gaseous emissions from the steam gun, the cyclone separator and other parts of the setup are collected and treated in an environmental control unit (not shown). Cleaned gases are exhausted to atmosphere from the environmental control unit.

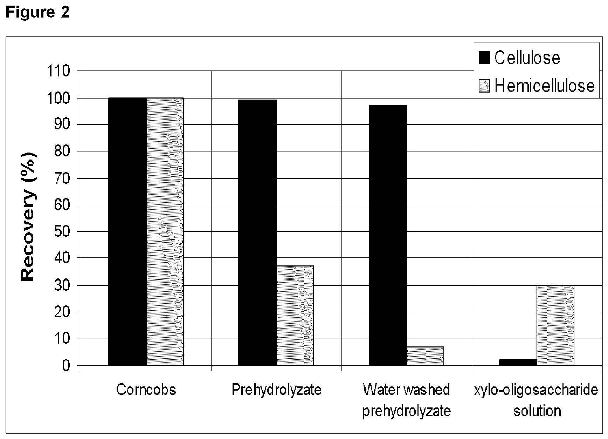

In order to simulate this new process, steam explosion pretreatment of corncobs was followed by batch washing at pilot scale with a 97% recovery of cellulose (Figure 2).

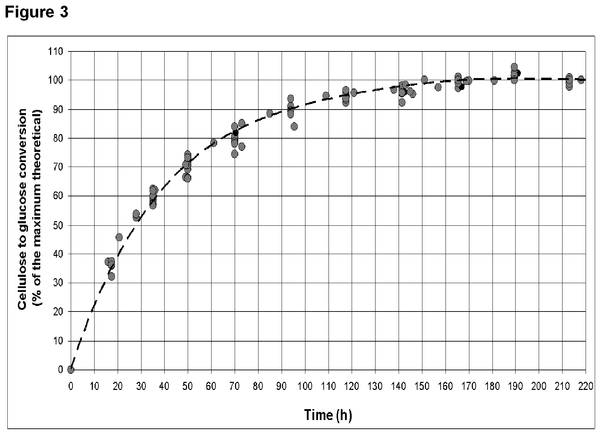

Extracted cellulose from the pilot scale pretreatment was highly susceptible to enzymatic hydrolysis. 80 % of the maximum theoretical cellulose to glucose conversion was achieved in 60 h. 90 % conversion of the 17 % consistency slurry was reached in 95 h, using only 0.23 % load of commercial cellulases product (Figure 3).

In Figure 3, the dashed line represents the trend of eleven enzymatic hydrolysis experiments carried out at three different scales (i.e. 1 kg, 300 kg and 2500 kg). These enzymatic hydrolysis experiments were carried out at 17 % consistency, 50 °C and pH 5.0. The pH adjustment chemical used was aqueous ammonia (30 %). Commercially available lignocellulolytic enzyme was used at a load of 0.23% weight/weight on incoming cob feedstock.

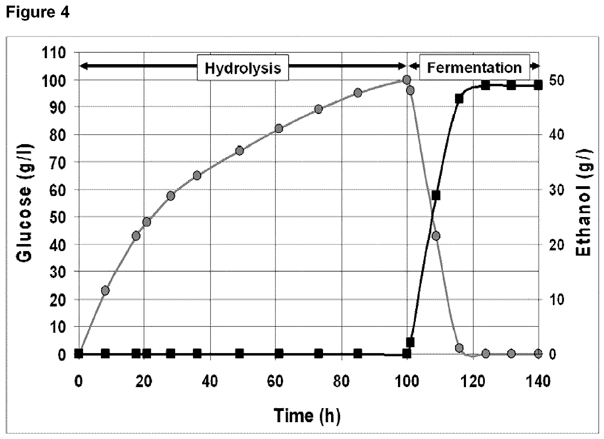

Samples of the continuously pretreated corncobs were hydrolyzed and fermented in a 2.5 metric tonne batch hydrolysis and fermentation trial (Figure 4). The results were in accordance with the lower scale pilot and the laboratory scale results (Figure 3). A concentration of 100 g/L glucose was reached at t $_{90\%}$ i.e. 100 hours hydrolysis of 17 % consistency slurry, using only 0.23 % load of commercial cellulase product.

The fermentability of the hydrolyzed cellulose was high. A concentration of 4.9 % alcohol was reached in 20 hours (Figure 4).

In Figure 4, hydrolysis was carried out at 50 °C, pH 5.0 and 0.5 % enzyme load. Fermentation was carried out at 33 °C, pH 5.3, using an industrial-grade C6-fermenting yeast. Hydrolysis and fermentation pH adjustment was carried out using aqueous ammonia (30 %). Grey circles indicate glucose concentration. Black squares indicate ethanol concentration.

The production of soluble xylo-oligosaccharides was equivalent to 12 % of the weight of raw corncobs processed at pilot scale. 63 % of the original content of corncobs hemicellulose was converted to volatile degradation products (Figure 2). 66 % of these volatiles were flashed off during the step of explosive decompression.

81 % of the hemicellulose remaining in the corncobs prehydrolysate after autohydrolysis was collected through the prehydrolysate water washing step. The resulting lignin free solution contained dissolved solids of which 87 % were sugars, including 63 % of xylo-oligosaccharides (w/w) on a dry matter basis.

Pretreatment of Low Lignin Hemicellulosic Biomass

This invention is a new process for fractionating low lignin cellulosic biomass from different sources into two main components, specifically cellulose and xylo-oligosaccharides. The purified cellulose component is valuable for many purposes. Specifically it may then be more easily hydrolyzed to glucose which in turn may be more easily fermented to ethanol or other biofuels than in previous processes.

The invention particularly relates to a process for the pretreatment of feedstocks with low lignin content for generating highly reactive cellulose prehydrolysate with a reduced content of compounds which have an inhibiting effect on cellulose hydrolysis and glucose fermentation such as hemicellulose hydrolysis and degradation products.

One disclosed aspect is a process for the pretreatment of low lignin biomass, for generating a lignin free solution of xylo-oligosaccharides with a ratio of xylo-oligosaccharide to acetic acid and volatile compounds from hemicellulose degradation of greater than 4.

In Figure 6, grey diamonds and the dashed line show that enough acetic acid was released from agricultural residues i.e. corncob hemicellulose to ensure a pH value of 3.8 during the cooking step, hence, there was no need for the addition of mineral catalysts. The black squares and the plain line show that 1.6 % by weight DM sulfuric acid had to be added to an energy crop, i.e. Miscanthus, biomass to ensure a pH value of 3.8 during steam explosion pretreatment. As can be seen in Figure 6, 0% sulfuric acid addition with corn cob biomass and 1.6% sulfuric acid addition to Miscanthus biomass are both between a pH level of 3.5-4.0.

## Process Description

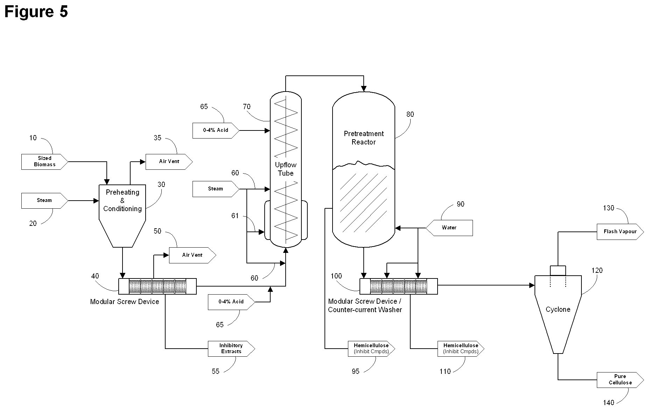

The preferred process of the invention (Figure 5) includes the following steps:

### Step 1 Feed Preparation

Low lignin biomass 10 is received, stored, cleaned and ground (0.5 to 1 cm$^3$ particle size) through a V shaped hopper and screw auger (not shown).

Biomass moisture is adjusted to a desired range of 30-60 % at this stage.

### Step 2 Preheating

Prepared biomass is preheated with live steam 20 at atmospheric pressure, in a holding bin 30 to a temperature of about 95 °C for 10 to 60 minutes.

Air and steam are vented 35 from the bin.

### Step 3 Heating and Catalyst(s) addition

Preheated biomass is compressed in a modular screw device 40 to remove air 50 liquefied inhibitory extracts and excess water and then fed into a pressurized up flow tube 70.

The tube is sized to provide a 3 to 15 minutes holdup time. The dry matter content of the biomass varies from 30 % to 60 % prior to the addition of steam and catalyst.

The biomass is further heated upstream of and in the up flow tube 70 to a pretreatment temperature of 170 °C to 220 °C by direct steam injection 60 or by indirect steam 61 in a jacketed section of the up flow tube.

Mineral acids or acid gases 65 are blended with the biomass in an amount up to 4% to obtain the desired value of pretreatment pH that ranges from pH 1.0 to pH 5.0; preferably pH 3.0 to pH 4.0; to catalyze the removal of hemicellulose and to activate the cellulose. The pH is measured after the desired exposure is reached.

The acid addition 65 is made through a set of one or more nozzles after the screw device and/or in along the length of the up flow tube.

The treated biomass moves through the up flow tube with the aid of a screw conveyor/mixer and is discharged into the pretreatment reactor 80.

**Step 4 Pretreatment**

The preheated and acidified biomass is discharged from the up flow tube 70 into the pretreatment reactor 80. The pretreatment reactor is sized to allow a residence time of 5 to 70 minutes. The low lignin biomass is preferably held at the target temperature to achieve a Severity Index of 3.5 to 4.0, the Severity Index being calculated according to the equation:

$$\text{Log Severity Index} = \text{Log}\left[\text{Exp}\left\{(\text{Temperature } ^\circ\text{C} - 100)/14.75\right\} \times \text{Retention Time (min)}\right].$$

Most preferably the severity index is 3.6.

**Step 5 Washing/pressing**

Pressurized biomass, still at the pressure of the pretreatment reactor is diluted with wash eluent water 90 as it exits the pretreatment reactor and the water with solubilized and suspended compounds is pressed from the biomass as it passes through the modular screw device 100, still under pressure. Further hot eluent water may also be added along the pressing device to achieve a greater extraction of soluble hemicellulose hydrolysis and degradation products and acid catalyst(s). The temperature of the wash water may vary.

In this washing stage the majority of the hemicellulose fraction 110 is removed. The hemicellulose removal efficiency may vary from 50% to 90% or greater. The water washing system in general uses a device that employs pressing or other means to separate solids form liquids. This can be accomplished with several different types of machines, which are well known to a person of skill in the art and need not be described in detail. A balance must be maintained between the removal of the water soluble components (Xylo-oligosaccharide fraction) and the need to minimize the amount of washing/eluent water added. It is the desire to minimize water use, as the xylo-oligosaccharide fraction must be concentrated for its eventual use. It is preferred to achieve a final xylose content of the prehydrolysate of 4% to 10%, the xylose is present as xylooligosaccharides and xylose.

A final refining step is required for producing pure xylo-oligosaccharides with a degree of purity suitable for fermentation, biofuels, pharmaceuticals, food and feed and agricultural applications. Vacuum evaporation (not shown) can be applied in order to increase the concentration and simultaneously remove volatile compounds and acid catalyst(s) such as furans, acetic acid, sulfuric acid or sulfur dioxide.

Solvent extraction, adsorption and ion-exchange precipitation have been proposed by those skilled in the art. Acid catalyst(s) and wash water are recycled and reused in the pretreatment process.

**Step 6 Recovery of purified cellulose**

Pressurized washed cellulose with a low level of hemicellulose is flashed into a cyclone 120. The solids fraction i.e. purified cellulose, collected at the bottom of the cyclone separator can be sent to the hydrolysis and fermentation stages.

Gaseous components are collected, condensed 130 and fed to the condensate station (not shown). Any gaseous emissions from the vessels, the cyclone separator and other parts of the setup are collected and treated in an environmental control unit (not shown). Cleaned gases are exhausted to atmosphere from the unit.

**EXAMPLE** 1 - **High pressure pretreatment of corncobs**

Steam explosion pretreatment of corncobs was carried out in a steam explosion pretreatment system pressurized with saturated steam at a temperature of 205 °C. No acid was added to the corncobs during the heating step. The overall retention time of corncob pretreatment is 8 min e.g. 3 min in an up flow tube, 5 min in a pretreatment reactor at pH 3.8. Corncob acidification resulted from the release of acetic acid from hemicellulose breakdown.

Pretreated corncobs were water washed.

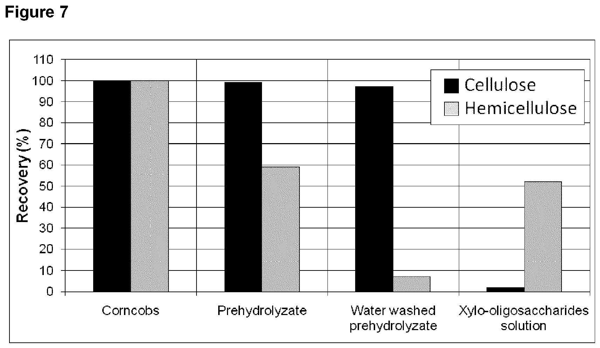

Cellulose extraction from corncobs was carried out at pilot scale with a percentage recovery of 92 % (Figure 7).

59 % of the incoming hemicellulose was recovered after high pressure pretreatment of corncobs. 52 % of incoming hemicellulose was collected into the xylo-oligosaccharides solution (Figure 7). The resulting lignin free solution contained 89 % sugars, including 66 % of xylo-oligosaccharides (w/w) on a dry matter basis.

### EXAMPLE 2 - Low pressure pretreatment of corncobs

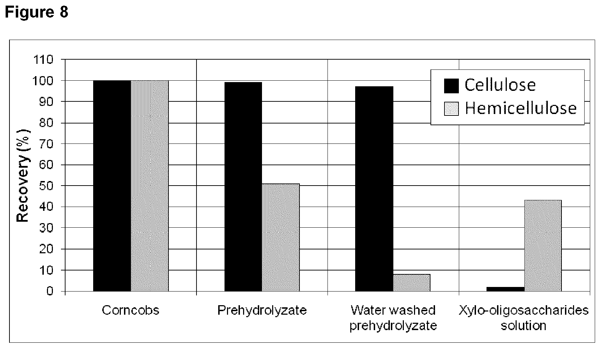

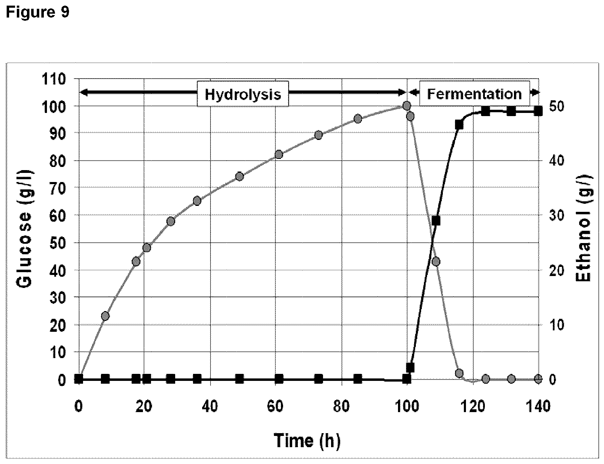

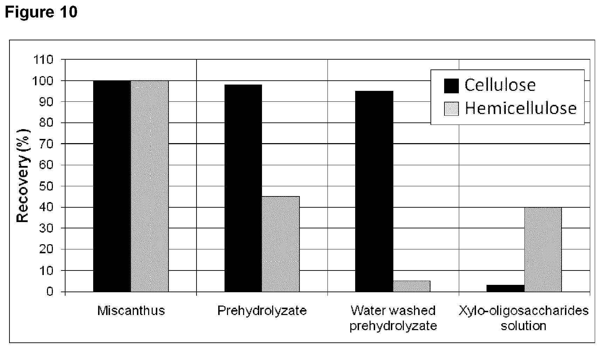

Steam explosion pretreatment of corncobs was carried out in a steam explosion pretreatment system pressurized with saturated steam at a temperature of 170 °C. No acid was added to the corncobs during the heating step. The overall retention time of corncobs pretreatment was 85 min e.g. 15 min in an up flow tube, 70 min in a pretreatment reactor at pH 3.8. Corncob acidification resulted from the release of acetic acid from hemicellulose breakdown.
Pretreated corncobs were water washed.
Cellulose extraction from corncobs was carried out at pilot scale with a percentage recovery of 92 % (Figure 8).
51 % of incoming hemicellulose was recovered after low pressure pretreatment of corncobs. 43 % of incoming hemicellulose was collected in the xylo-oligosaccharides solution (Figure 8). The resulting lignin free solution contained 88 % sugars, including 65 % of xylo-oligosaccharides (w/w) on a dry matter basis.
After explosive decompression, the solid fraction from high or low pressure pretreatment i.e. purified cellulose was collected at the bottom of cyclone separator, shredded and then diluted with fresh water up to 17 % consistency.
Extracted cellulose from high and low pressure continuous pilot scale pretreatment of corncobs was highly susceptible to enzymatic hydrolysis. Digestibility of cellulose pretreated at high and low pressure was similar (Figure 3). 80 % of the maximum theoretical cellulose to glucose conversion was achieved in 60 h. 90 % conversion of the 17 % consistency slurry was reached in 95 h, using only 0.23 % load of commercial cellulases product (Figure 3).
In Figure 3, the dashed line represents the trend of six duplicate enzymatic hydrolysis experiments carried out at three different scales (i.e. 1 kg, 300 kg and 2500 kg) with cellulose extracted at high or low pressure. These enzymatic hydrolysis experiments were carried out at 17 % consistency, 50 °C and pH 5.0. The pH adjustment chemical used was aqueous ammonia (30 %). Commercially available lignocellulolytic enzyme was used at a load of 0.23 % weight/weight on incoming cob feedstock.
At pilot scale (2.5 metric tonne fed batch hydrolysis and fermentation trial, Figure 9) a concentration of 100 g/L glucose representing 91% conversion of the cellulose was reached after 100 hours hydrolysis of a 17 % consistency slurry from low pressure pretreatment.
In Figure 9, hydrolysis was carried out at 50 °C, pH 5.0 and 0.5 % enzyme load. Fermentation was carried out at 33 °C, pH 5.3, using an industrial grade C6-fermenting yeast. Hydrolysis and fermentation pH adjustment was carried out using aqueous ammonia (30 %). Grey circles indicate glucose concentration. Black squares indicate ethanol concentration.
Fermentability of the hydrolyzed cellulose was evaluated by adding enough C6-industrial grade commercial yeast to reach a concentration of $10^8$ yeast cells per gram hydrolysate at 33°C, pH 5.3 when 90 % of the maximum theoretical cellulose to glucose conversion was reached. pH adjustment was carried out with aqueous ammonia (30 %) prior to yeast addition.
Fermentability of the hydrolyzed cellulose was high. A concentration of 4.9 % alcohol was reached in 20 hours (Figure 10).

### EXAMPLE 3 - Low pressure pretreatment of Miscanthus

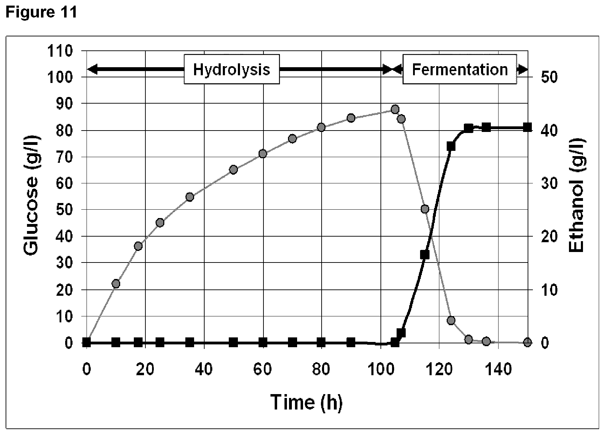

Steam explosion pretreatment of Miscanthus was carried out in a system pressurized with saturated steam at a temperature of 170 °C. Miscanthus fibers were impregnated with sulfuric acid in the amount of 1.6 % by weight DM during the heating step. The overall retention time of the Miscanthus pretreatment was 30 min at pH 3.8.
Pretreated Miscanthus was water washed.
Cellulose extraction from Miscanthus was carried out at pilot scale with a percentage recovery in the solid fraction of 95 % (Figure 10).
45 % of the incoming hemicellulose was recovered after pretreatment of Miscanthus. 40 % of the incoming hemicellulose was collected in the xylo-oligosaccharides solution (Figure 10). The resulting lignin free solution contained 85 % sugars, including 62 % of xylo-oligosaccharides (w/w) on a dry matter basis.
Extracted cellulose from pilot scale pretreatment of Miscanthus was highly susceptible to enzymatic hydrolysis. 80 % of the maximum theoretical cellulose to glucose conversion was achieved in 73 h. 90 % conversion of the 17 % consistency slurry was reached in 105 h, using a 1 % load of commercial cellulase (Figure 11).
In Figure 11, hydrolysis was carried out at 50 °C, pH 5.0, using commercially available lignocellulolytic enzyme product at a load of 1.0 % weight/weight on incoming cob feedstock. Fermentation was carried out at 33 °C, pH 5.3 using an industrial-grade C6-fermnenting yeast.
A concentration of 88 g/L glucose representing 90% conversion of cellulose was reached after 100 hours of hydrolysis of a 17 % consistency slurry.
Fermentability of the hydrolyzed cellulose was evaluated by adding enough C6-industrial grade commercial yeast to reach a concentration of $10^8$ yeast cells per gram hydrolysate at 33°C, pH 5.3. The time needed to reach 90 % of the maximum theoretical cellulose to glucose conversion was determined. pH adjustment was carried out with aqueous ammonia (30 %) prior to yeast addition.

The fermentability of the hydrolyzed cellulose was high. A concentration of 4.1 % alcohol was reached in 30 hours (Figure 9).

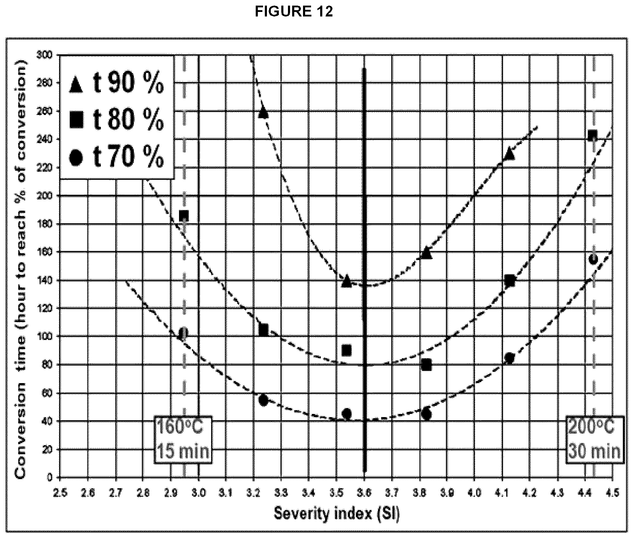

Figure 12 shows cellulose conversion times at various levels of digestion versus Severity Index. In particular, Figure 12 shows the amount of time for enzyme digestion of 70%, 80%, and 90% of the cellulose for Miscanthus biomass which was steam heated with 1.6% sulphuric acid to achieve a pH of 3.8, which is the same pH as the prehydrolysate of corn cob biomass with 0% sulfuric acid, as shown in Figure 6. In the example shown in Figure 12, Miscanthus was steam heated at various Severity Indices and ,as shown in Figure 12, the ideal Severity Index is about 3.6 which results in the enzymatic conversion of cellulose in the least amount of time.

The inventors have discovered that the ideal Severity Index used for miscanthus was not as expected. Pretreatment of corn cobs releases sufficient acetic acid for autohydrolysis at a Severity Index of 4.0 with a pH of about 3.8 and provides the best enzymatic hydrolysis time. If the same process conditions of temperature, pressure, pH, and time is duplicated for Miscanthus, simply by trying to reach the same pH with acid, this leads to significantly lower cellulose digestibility. This result was unexpected and is well illustrated in Figure 12 which clearly indicates that the ideal Severity Index for the lowest enzymatic cellulose digestion of miscanthus at about pH 3.8 (1.6% sulphuric acid) is 3.6. Thus, as was first thought processing Miscanthus, a low acetyl low lignin biomass, at the same pH as corn cobs in itself is not sufficient as the pretreatment must also be adjusted to more gentle conditions. It is expected that, for other feedstocks that require less acid than Miscanthus but still require additional acid to achieve the same pH, the optimal Severity index would range between 3.6 to 4.0 as these other feedstocks get closer to corn cobs which work best at a Severity Index of 4.0.

**References (pretreatment of low lignocellulosic biomass)**

(1) Shapouri H et al. (1995) USDA Report 721. Estimating the net energy balance of corn ethanol.

(2) Shapouri H et al. (2002) USDA Report 813. The Energy Balance of corn ethanol: an update.

(3) Chow J et al.(2003) Science, 302, 1528-1531 Energy resources and global development.

(4) Wald ML, Barrionuevo A (2007) New York Times, April 7th, The Energy challenge: A Renewed push for ethanol, without the corn.

(5) Greeg D (2008) Biocycle, 49, 11-47. Commercializing cellulosic ethanol.

(6) Hill J et al. (2006) Proc. Natl. Acad. Sci. USA, 103, 11206-11210. Environmental, economic, and energetic costs and benefits of biodiesel and ethanol biofuels.

(7) Farrell AE et al. (2006) Science, 311, 506-508. Ethanol can contribute to energy and environmental goals.

(8) Somerville C (2007) Current biology, 17, 115-119. Biofuels.

(9) Schuetzle D et al. (2007) Western Governors' Association. Alcohol fuels from biomass-Assessment of production technologies.

(10) Chum L, Overend R (2002) Fuel Processing technology, 71, 187-195. Biomass and renewable fuels.

(11) Wyman CE (1996) Taylor & Francis: Washington DC, USA, Handbook on bioethanol: production and utilization.

(12) Delmer DP, Amor Y (1995) Plant Cell, 7, 987-1000. Cellulose biosynthesis.

(13) Morohoshi N (1991) In Wood and cellulosic chemistry; Hon, D.N.S, Shiraishi, N., Eds.; Marcel Dekker, Inc.: New York, USA, Chemical characterization of wood and its components.

(14) Ha MA et al. (1998) Plant J. 1998, 16, 183-190. Fine structure in cellulose microfibrils: NMR evidence from onion and quince.

(15) Palmqvist E, Hahn-Hagerdal B (2000) Bioresource Technol., 74, 25-33. Fermentation of lignocellulosic hydrolysates. II: Inhibitors and mechanisms of inhibition.

(16) De Vrije T et al (2002) International journal of hydrogen energy, 27, 1381-1390. Pretreatment of miscanthus for hydrogen production by thermotoga elfii.

(17) Galbe M, Zacchi G (2002) Appl Microbiol Biotechnol 59 618-628. A review of the production of ethanol from softwood.

(18) Torget R et al. (1991) Bioresource Technol., 35, 239-246. Dilute sulfuric acid pretreatment of hardwood bark.

(19) Donghai S et al. (2006) Chinese J. Chem. Eng., 14, 796-801. Effects of different pretreatment modes on the enzymatic digestibility of corn leaf and corn stalk.

(20) Renewable Fuels for advanced Powertrains-Final report (2008) www.renew-fuel.com/download.php?dl=renew-final-report-080627.pdf&kat=5

(21) Bullard M, Metcalfe P (2001) Crown publisher ETSU B/U1/00645/REP DTI/Pub URN 01/797. Estimating the energy requirement and CO2 emission from production of the perennial grasses miscanthus, switchgears and reed canary grass.

(22) Newman R (2003) Crown publisher ETSU B/W2/00618/REP-URN 03/1568. Miscanthus- Practical aspects of biofuel development.

(23) Christian DG, Haase E (2001). Agronomy of Miscanthus. In M.B. Jones & M. Walsh, Miscanthus for energy and fibre. London: James and James.

(24) Planting and Growing Miscanthus (2007) Department for Environment, Food and Rural Affairs (Defra) http://www.defra.gov.uk/erdp/pdfs/ecs/miscanthus-guide.pdf

(25) Papatheofanous MG et al. (1995) Biomass and Bioenergy, 8, 419-426. Biorefining of agricultural crops and residues: effect of pilot-plant fractionation on properties of fibrous fractions.

(26) Lange W (1992) Holzforschung, 46, 277-282. Extracts of miscanthus grass (Miscanthus sinensis Anderss.). A comparison of the 'summer-green' and the 'winter-dry' plant.

(27) Sims, R (2003) Elsevier Science: London, UK, Biomass and resources bioenergy options for a cleaner environment in developed and developing countries.

(28) Sjöström, E (1993) Academic Press: San Diego, USA, Wood chemistry: fundamentals and applications.

(29) Price L et al. (2004) Biomass and Bioenergy, 3-13. Identifying the yield potential of Miscanthus x giganteus: an assessment of the spatial and temporal variability of M. x giganteus biomass productivity across England and Wales.

(30) Velasquez JA et al. (2003) Wood Science and Technology, 37, 269-278. Binderless fiberboards from steam exploded Miscanthus sinensis.

(31) Lewandowski I et al. (2003) Agronomy J, 95, 1274-1280. Environment and harvest time affects the combustion qualities of Miscanthus genotypes.

(32) Kurakake M et al (2001) Applied biochemistry and Biotechnology, 90, 251-259. Pretreatment with ammonia water for enzymatic hydrolysis of corn husk, bagasse, and switchgrass.

(33) Lewandowski I et al. (2003) Biomass and Bioenergy, 25, 335-361. Development and current status of perennial rhizomatous grasses as energy crops in the US and Europe.

(34) Sun Y, Cheng J (2002) Bioresources Technol., 83, 1-11. Hydrolysis of lignocellulosic materials for ethanol production :A review.

(35) McMillan JD (1994) In Enzymatic Conversion of Biomass for Fuels Production; Himmel, M.E., Baker, J.O., Overend, R.P., Eds.; ACS: Washington DC, USA, 1994; pp. 292-324. Pretreatment of lignocellulosic biomass.

(36) Fan L et al (1982) Adv. Biochem. Eng. Biotechnol., 23, 158-183. The nature of lignocellulosics and their pretreatments for enzymatic hydrolysis.

(37) Mosier N et al. (2005) Bioresources Technol, 96, 673-686. Features of promising technologies for pretreatment of lignocellulosic biomass.

(38) Henley RG et al. (1980) Enzyme Microb. Tech., 2, 206-208. Enzymatic saccharification of cellulose in membrane reactors.

(39) Berlin A et al. (2006) J. Biotechnol., 125, 198-209. Inhibition of cellulase, xylanase and beta-glucosidase activities by softwood lignin preparations.

(40) Chandra R et al. (2007) Adv. Biochem. Eng. Biotechnol, 108, 67-93.Substrate pretreatment: The key to effective enzymatic hydrolysis of lignocellulosics?

(41) Kassim EA, El-Shahed AS (1986) Agr. Wastes, 17, 229-233. Enzymatic and chemical hydrolysis of certain cellulosic materials.

(42) Xu Z et al (2007) Biomass Bioenerg. 2007, 31, 162-167. Enzymatic hydrolysis of pretreated soybean straw.

(43) Vaccarino C et al (1987) Biol. Waste, 20, 79-88. Effect of SO2NaOH and Na2CO3 pretreatments on the degradability and cellulase digestibility of grape marc.

(44) Silverstein RA et al (2007) Bioresource Technol,. 2007, 98, 3000-3011.A comparison of chemical pretreatment methods for improving saccharification of cotton stalks.

(45) Zhao X et al (2007) Bioresource Technol., 99, 3729-3736. Comparative study on chemical pretreatment methods for improving enzymatic digestibility of crofton weed stem.

(46) Gaspar M et al (2007) Process Biochem., 2007, 42, 1135-1139. Corn fiber as a raw material for hemicellulose and ethanol production.

(47) Saha BC, Cotta MA (2006) Biotechnol. Progr., 22, 449-453. Ethanol production from alkaline peroxide pretreated enzymatically saccharified wheat straw.

(48) Saha BC, Cotta MA (2007) Enzyme Microb. Tech., 41, 528-532. Enzymatic saccharification and fermentation of alkaline peroxide pretreated rice hulls to ethanol.

(49) Mishima D et al (2006) Bioresource Technol. 2006, 97, 2166-2172.Comparative study on chemical pretreatments to accelerate enzymatic hydrolysis of aquatic macrophyte biomass used in water purification processes.

(50) Sun XF et al (2005) Carbohyd. Res., 340, 97-106. Characteristics of degraded cellulose obtained from steam-exploded wheat straw.

(51) Alizadeh H et al (2005) Appl. Biochem. Biotechnol., 124, 1133-41. Pretreatment of switchgrass by ammonia fiber explosion (AFEX).

(52) Chundawat SP et al (2007) Biotechnol. Bioeng., 96, 219-231. Effect of particle size based separation of milled corn stover on AFEX pretreatment and enzymatic digestibility.

(53) Eggeman T, Elander RT. (2005) Bioresource Technol., 96, 2019-2025. Process and economic analysis of pretreatment technologies.

(54) Chum HL (1985) Solar Energy Research Institute: Golden, Colorado, 1-64. Evaluation of pretreatments of biomass for enzymatic hydrolysis of cellulose.

(55) Taherzadeh MJ, Karimi K (2007) Bioressources, 2, 472-499. Process for ethanol from lignocellulosic materials I: Acid-based hydrolysis processes.

(56) Ruiz E et al (2008) Enzyme Microb. Tech., 42, 160-166. Evaluation of steam explosion pretreatment for enzymatic hydrolysis of sunflower stalks.

(57) Ballesteros M et al. (2004) Process Biochem., 39, 1843-1848. Ethanol from lignocellulosic materials by a simultaneous saccharification and fermentation process (SFS) with Kluyveromyces marxianus CECT 10875.

(58) Negro MJ et al (2003) Appl. Biochem. Biotechnol., 105, 87-100. Hydrothermal pretreatment conditions to enhance ethanol production from poplar biomass.

(59) Kurabi A et al (2005) Appl. Biochem. Biotechnol., 121-124. Enzymatic hydrolysis of steam exploded and ethanol organosolv-pretreated Douglas-firby novel and commercial fungal cellulases.

(60) Varga E et al (2004) Appl. Biochem. Biotechnol., 509-523. Optimization of steam pretreatment of corn stover to enhance enzymatic digestibility.

(61) Eklund R (1995) Bioresource Technol., 52, 225-229. The influence of SO2 and H2SO4 impregnation of willow prior to steam pretreatment.

(62) Yang B, Wyman CE (2004) Biotechnol. Bioeng, 86, 88-95. Effect of xylan and lignin removal by batch and flowthrough pretreatment on the enzymatic digestibility of corn stover cellulose.

(63) Eggeman T, Elander RT. (2005) Bioresource Technol., 96, 2019-2025. Process and economic analysis of pretreatment technologies.

(64) Girio FMF (1997) FAIR-CT97-3811. Development of xylooligosaccharides and xylitol for use in pharmaceutical and food industries (Xylophone)

(65) Izumi et al (2002) US patent application #2002195213 A1. Process for producing xylooligosaccharide from lignocellulose pulp., 16pp

(66) Yu S et al (2002) Faming Zhuanli Shengqing Gongkai Shuomingshu, CN 1364911 A, 7pp Preparation of xylooligosaccharide by degradation of plant fiber with enzyme.

(67) Kabel MA et al (2002) Carbohydrate Polymers, 50, 47-56. Hydrothermally treated xylan rich by-products yield different classes of xylo-oligosaccharides.

(68) Werpy T, Petersen G (2004) DOE - Top Value Added Chemicals from Biomass - Volume I: Results of screening for potential candidates from sugars and synthesis gas http://www1.eere.energy.gov/biomass/pdfs/35523.pdf

(69) Carvalheiro F et al (2008) Journal of Scientific & Industrial Research, 67, 849-864. Hemicellulsoe biorefineries: a review on biomass pretreatments

(70) Ebringerova A (2006) Macromolecular Symposia, 232, 1-12. Structural diversity and application potential of hemicelluloses.

**References (Pretreatment of corncobs)**

Shapouri H et al. (1995) USDA Report 721. Estimating the net energy balance of corn ethanol.

Shapouri H et al. (2002) USDA Report 813. The Energy Balance of corn ethanol: an update.

Chow J et al.(2003) Science, 302, 1528-1531 Energy resources and global development.

Wald ML, Barrionuevo A (2007) New York Times, April 7th, The Energy challenge: A Renewed push for ethanol, without the corn.

Gregg D (2008) Biocycle, 49, 11-47. Commercializing cellulosic ethanol.

Hill J et al. (2006) Proc. Natl. Acad. Sci. USA, 103, 11206-11210. Environmental, economic, and energetic costs and benefits of biodiesel and ethanol biofuels.

Farrell AE et al. (2006) Science, 311, 506-508. Ethanol can contribute to energy and environmental goals.

Somerville C (2007) Current biology, 17, 115-119. Biofuels.

Schuetzle D et al. (2007) Western Governors' Association. Alcohol fuels from biomass-Assessment of production technologies.

Chum L, Overend R (2002) Fuel Processing technology, 71, 187-195. Biomass and renewable fuels.

Wyman CE (1996) Taylor & Francis: Washington DC, USA, Handbook on bioethanol: production and utilization.

Delmer DP, Amor Y (1995) Plant Cell, 7, 987-1000. Cellulose biosynthesis.

Morohoshi N (1991) In Wood and cellulosic chemistry; Hon, D.N.S, Shiraishi, N., Eds.; Marcel Dekker, Inc.: New York, USA, Chemical characterization of wood and its components.

Ha MA et al. (1998) Plant J. 1998, 16, 183-190. Fine structure in cellulose microfibrils: NMR evidence from onion and quince.

Palmqvist E, Hahn-Hagerdal B (2000) Bioresource Technol., 74, 25-33. Fermentation of lignocellulosic hydrolysates. II: Inhibitors and mechanisms of inhibition.

De Vrije T et al (2002) International journal of hydrogen energy, 27, 1381-1390. Pretreatment of miscanthus for hydrogen production by thermotoga elfii.

Galbe M, Zacchi G (2002) Appl Microbiol Biotechnol 59 618-628. A review of the production of ethanol from softwood.

Torget R et al. (1991) Bioresource Technol., 35, 239-246. Dilute sulfuric acid pretreatment of hardwood bark.

Donghai S et al. (2006) Chinese J. Chem. Eng., 14, 796-801. Effects of different pretreatment modes on the enzymatic digestibility of corn leaf and corn stalk.

Sun Y, Cheng J (2002) Bioresources Technol., 83, 1-11. Hydrolysis of lignocellulosic materials for ethanol production :A review.

McMillan JD (1994) In Enzymatic Conversion of Biomass for Fuels Production; Himmel, M.E., Baker, J.O., Overend, R.P., Eds.; ACS: Washington DC, USA, 1994; pp. 292-324. Pretreatment of lignocellulosic biomass.

Fan L et al (1982) Adv. Biochem. Eng. Biotechnol., 23, 158-183. The nature of lignocellulosics and their pretreatments for enzymatic hydrolysis.

Mosier N et al. (2005) Bioresources Technol, 96, 673-686. Features of promising technologies for pretreatment of lignocellulosic biomass.

Henley RG et al. (1980) Enzyme Microb. Tech., 2, 206-208. Enzymatic saccharification of cellulose in membrane reactors.

Berlin A et al. (2006) J. Biotechnol., 125, 198-209. Inhibition of cellulase, xylanase and beta-glucosidase activities by softwood lignin preparations.

Chandra R et al. (2007) Adv. Biochem. Eng. Biotechnol, 108, 67-93.Substrate pretreatment: The key to effective enzymatic hydrolysis of lignocellulosics?

Kassim EA, El-Shahed AS (1986) Agr. Wastes, 17, 229-233. Enzymatic and chemical hydrolysis of certain cellulosic materials.

Xu Z et al (2007) Biomass Bioenerg. 2007, 31, 162-167. Enzymatic hydrolysis of pretreated soybean straw.

Vaccarino C et al (1987) Biol. Waste, 20, 79-88. Effect of SO2NaOH and Na2CO3 pretreatments on the degradability and cellulase digestibility of grape marc.

Silverstein RA et al (2007) Bioresource Technol,. 2007, 98, 3000-3011.A comparison of chemical pretreatment methods for improving saccharification of cotton stalks.

Zhao X et al (2007) Bioresource Technol., 99, 3729-3736. Comparative study on chemical pretreatment methods for improving enzymatic digestibility of crofton weed stem.

Gaspar M et al (2007) Process Biochem., 2007, 42, 1135-1139. Corn fiber as a raw material for hemicellulose and ethanol production.

Saha BC, Cotta MA (2006) Biotechnol. Progr., 22, 449-453. Ethanol production from alkaline peroxide pretreated enzymatically saccharified wheat straw.

Saha BC, Cotta MA (2007) Enzyme Microb. Tech., 41, 528-532. Enzymatic saccharification and fermentation of alkaline peroxide pretreated rice hulls to ethanol.

Mishima D et al (2006) Bioresource Technol. 2006, 97, 2166-2172.Comparative study on chemical pretreatments to accelerate enzymatic hydrolysis of aquatic macrophyte biomass used in water purification processes.

Sun XF et al (2005) Carbohyd. Res., 340, 97-106. Characteristics of degraded cellulose obtained from steam-exploded wheat straw.

Alizadeh H et al (2005) Appl. Biochem. Biotechnol., 124, 1133-41. Pretreatment of switchgrass by ammonia fiber explosion (AFEX).

Chundawat SP et al (2007) Biotechnol. Bioeng., 96, 219-231. Effect of particle size based separation of milled corn stover on AFEX pretreatment and enzymatic digestibility.

Eggeman T, Elander RT. (2005) Bioresource Technol., 96, 2019-2025. Process and economic analysis of pretreatment technologies.

Chum HL (1985) Solar Energy Research Institute: Golden, Colorado, 1-64. Evaluation of pretreatments of biomass for enzymatic hydrolysis of cellulose.

Taherzadeh MJ, Karimi K (2007) Bioressources, 2, 472-499. Process for ethanol from lignocellulosic materials I: Acid-based hydrolysis processes.

Ruiz E et al (2008) Enzyme Microb. Tech., 42, 160-166. Evaluation of steam explosion pretreatment for enzymatic hydrolysis of sunflower stalks.

Ballesteros M et al. (2004) Process Biochem., 39, 1843-1848. Ethanol from lignocellulosic materials by a simultaneous saccharification and fermentation process (SFS) with Kluyveromyces marxianus CECT 10875.

Negro MJ et al (2003) Appl. Biochem. Biotechnol., 105, 87-100. Hydrothermal pretreatment conditions to enhance ethanol production from poplar biomass.

Kurabi A et al (2005) Appl. Biochem. Biotechnol., 121-124. Enzymatic hydrolysis of steam exploded and ethanol organosolv-pretreated Douglas-firby novel and commercial fungal cellulases.

Varga E et al (2004) Appl. Biochem. Biotechnol., 509-523. Optimization of steam pretreatment of corn stover to enhance enzymatic digestibility.

Eklund R (1995) Bioresource Technol., 52, 225-229. The influence of SO2 and H2SO4 impregnation of willow prior to steam pretreatment.

Yang B, Wyman CE (2004) Biotechnol. Bioeng, 86, 88-95. Effect of xylan and lignin removal by batch and flowthrough pretreatment on the enzymatic digestibility of corn stover cellulose.

Eggeman T, Elander RT. (2005) Bioresource Technol., 96, 2019-2025. Process and economic analysis of pretreatment technologies.

Vazquez M, et al (2006) Industrial Crops and Products, 24, 152-159. Enhancing the potential of oligosaccharides from corncob autohydrolysis as prebiotic food ingredients

Moura P, et al (2007) LWT, 40, 963-972. IN vitro fermentation of xylooligosaccharides from corncobs autohydrolysis by Bifidobacterium and Lactobacuillus strains

CLAUSES :

1. A continuous process for fractionation of lignocellulosic biomass having a lignin content of less than 12%, comprising the steps of:

a) exposing the lignocellulosic biomass to steam in a reaction vessel at a preselected temperature and a preselected reaction pressure, for a preselected exposure time, and at a selected pH value for removing a hemicellulose fraction of the lignocellulosic biomass and activating a cellulose fraction of the lignocellulosic biomass to obtain a prehydrolyzed lignocellulosic biomass;
b) purging liquid condensate and vapor generated during the exposure step to remove and collect a first liquid stream with water soluble compounds and a first vapor stream with volatile chemicals;
c) extracting liquid containing hemicellulose hydrolysis and degradation components from the prehydrolysed lignocellulosic biomass as a hemicellulose degradation stream;
d) rapidly releasing the reaction pressure after the extracting step to afford explosive decompression of the prehydrolyzed lignocellulosic biomass into fibrous solids, vapor and condensate; and
e) collecting the vapor and condensate from the explosive decompression for separation and recovery of by-products.

2. The process of clause 1, wherein an acid catalyst(s) is added during the exposing step.

3. The process of clause 2, wherein the lignocellulosic biomass is selected from the group consisting of miscanthus, switchgrass, corn cob, prairie grass, sorghum straw, corn stover, and wheat straw.

4. The process of clause 2, wherein the lignocellulosic biomass is miscanthus.

5. The process of clause 2, wherein the steam pretreatement is carried out at a temperature of 170 °C to 205 °C.

6. The process of clause 2, wherein the steam pretreatment is carried out for less than 90 min at a pH value of 3.0 to 4.0.

7. The process of clause 2, wherein the steam pretreatment is carried out for less than 90 minutes at a pH value of pH 3.5-3.9.

8. The process of clause 1, wherein the pH value is adjusted using pH adjustment chemical(s) or acid catalysts.

9. The process of clause 8, wherein the acid catalyst is all or in part acetic acid released from the breakdown of the hemicellulose fraction of the lignocellulosic biomass.

10. The process of clause 8, wherein pH adjustment chemical(s) or acid catalyst(s) include mineral acids or acid gases blended with the biomass in an amount of up to 4%.

11. The process of clause 2, wherein a severity index of 3.5 to 4.0 is maintained during the exposing step, the severity index being calculated according to the equation:

Severity Index = Log x Exp {(Temperature °C – 100)/14.75) x Retention Time (min).

12. The process of clause 11, wherein the severity index is maintained at 3.6.

13. The process of clause 11, wherein the exposing step is carried out at the reaction temperature of 170 °C, the reaction pressure of 100 psig, and for the time interval of 25-85 minutes.

14. The process of clause 11, wherein the exposing step is carried out at the reaction temperature of 170 °C, the reaction pressure of 100 psig, and for the time interval of 34.5 minutes.

15. The process of clause 11, wherein the Severity Index is about 3.6 and the pH after the retention time is 3.0 to 4.0.

16. The process of clause 1, wherein a Severity Index of 3.8 to 4.1 is maintained during the exposing step, the severity index being calculated according to the equation:

Severity Index = Log x Exp {(Temperature °C – 100)/14.75) x Retention Time (min).

17. The process of clause 16, wherein the Severity Index is maintained at 4.0.

18. The process of clause 17, wherein the pH after the retention time is 3.0 to 4.0.

19. The process of clause 17, wherein the exposing step is carried out at the reaction temperature of 205 °C, the reaction pressure of 235 psig, and for the time interval of 8 minutes.

20. The process of clause 17, wherein the exposing step is carried out at the preselected reaction temperature of 170 °C, the preselected reaction pressure of 100 psig, and for the preselected exposure time of 85 minutes.

21. The process of clause 17, wherein the exposing step is controlled to achieve a pH of 3.0 to 4.0 at the end of the preselected exposure time.

22. The process of clause 17, wherein the lignocellulosic biomass has an acetyl content selected to achieve a pH of 3.5 to 4.0 at the end of preselected exposure time.

23. The process of clause 21, wherein the lignocellulosic biomass is corn cob.

24. The process of clause 1, where the lignocellulosic biomass is selected from the group consisting of corn cobs, sugar cane bagasse, switchgrass, prairie grass, sorghum bagasse, corn stover, and wheat straw.

25. The process of clause 1, wherein the process is carried out in a pretreatment exposing system and volatile compounds are removed continuously by venting the pretreatment exposing system.

26. The process of clause 1, wherein the process is carried out in a pretreatment exposing system and the purging of the liquid condensate takes place continuously at purging points in the pretreatment exposing system.

27. The process of clause 1, wherein solubilized degradation byproducts of hemicellulose created in the exposing step are extracted and removed from the pretreated lignocellulosic biomass under pressure prior to explosive decompression.

28. The process of clause 26, wherein an eluent is added to the pretreated lignocellulosic biomass prior to the step of extracting and removing the hemicellulose under pressure.

29. The process of clause 26, wherein the process is carried out in a pretreatment unit having a pretreatment reactor with an outlet connected to a solid-liquid separation device, and wherein wash water is added at a bottom of the pretreatment reactor and/or along the solid-liquid separation device to achieve a greater extraction of a soluble hemicellulose fraction of the lignocellulosic biomass.

30. The process of clause 1, wherein solubilized byproducts of hemicellulose degradation created in the exposing step are extracted and removed from the solid portion both before and after explosive decompression, with or without the addition of an eluent.

31. The process of clause 1, wherein solubilized byproducts of hemicellulose degradation created in the exposing step are extracted and removed from the pretreated lignocellulosic biomass with or without the addition of an eluent to produce a solid cellulose rich fiber containing 4% to 10% xylose content as xylose and xylose oligosaccharides.

32. The process of clause 1, wherein solubilized byproducts of hemicellulose degradation created in the pretreatment exposing step are extracted and removed from the pretreated lignocellulosic biomass with or without the addition of an eluent to produce a solid cellulose rich fiber containing 6% +/- 1% xylose content as xylose and xylose oligosaccharides.

33. The process of clause 1, wherein the removal of hydrolyzed and degraded hemicellulose and cellulose degradation products in the liquid phase is enhanced by using a mechanical compression device selected from the group consisting of a MSD, a drainer screw, a filter press, a belt press, and a filter to separate liquid from solid fibers to achieve a target 6% +/- 1% xylose content as xylose and xylose oligosaccharides.

34. The process of clause 1, wherein pretreated fibrous solids are extracted with water as eluent, and the eluent water with hemicellulose hydrolysis and degradation components is subsequently separated for producing a hemicellulose or lignin free xylose and xylo-oligosaccharides solution including other chemicals which inhibit enzymatic hydrolysis.

35. The process of clause 1, wherein extracted fibrous solids are separated from the liquid by mechanical processing selected from the group consisting of compressing, filtering, centrifuging, and combinations thereof.

36. The process of clause 1, wherein the lignocellulosic biomass is counter current washed with water eluent to enhance the hemicellulose hydrolysis and degradation extraction.

37. The process of clause 1, wherein the water as eluent is derived from recycle streams of the process, or recycled eluent water.

38. The process of clause 1, wherein hemicellulose hydrolysis and degradation product fractions in the hemicellulose degradation stream are collected for value added purposes.

39. The process of clause 1, wherein the acetic acid in the vapor purge stream is recycled back to the exposing step to enhance the hemicellulose hydrolysis and degradation.

40. The process of clause 1, wherein acetic acid in the first vapor stream is collected for value added purposes.

41. The process of clause 1, wherein acetic acid in the first vapor stream and the hemicellulose degradation stream is collected for value added purposes.

42. The process of clause 1, wherein furfural is produced in the exposing step, the furfural is condensed from the vapor purge stream and other streams and is collected for value added purpose.

43. The process of clause 1, wherein the lignocellulosic biomass is pre-steamed prior to the exposing step with steam for 10 to 60 min at a temperature of up to 99 Celsius to remove air and adjust a moisture content of the lignocellulosic biomass to between 30 and 60%.

**Claims**

1. A continuous process for fractionation of lignocellulosic biomass having a lignin content of less than 12%, comprising the steps of:

   a) exposing the lignocellulosic biomass to steam and an acid catalyst in a reaction vessel at a preselected temperature and a preselected reaction pressure, for a preselected exposure time, and at a selected pH value for removing a hemicellulose fraction of the lignocellulosic biomass and activating a cellulose fraction of the lignocellulosic biomass to obtain a prehydrolyzed lignocellulosic biomass;
   wherein the pH value is adjusted using an acid catalyst,
   wherein the acid catalyst is all or in part acetic acid released from the breakdown of the hemicellulose fraction of the lignocellulosic biomass,
   wherein a severity index of 3.5 to 4.0 is maintained during the exposing step, the severity index being calculated according to the equation: Log Severity Index = Log [Exp {(Temperature °C - 100)/14.75} x Retention Time (min)], and wherein the steam pretreatment is carried out for less than 90 min at a pH value of 3.0 to 4.0;
   b) purging liquid condensate and vapor generated during the exposure step to remove and collect a first liquid stream with water soluble compounds and a first vapor stream with volatile chemicals;
   c) extracting and removing from the prehydrolysed lignocellulosic biomass, under pressure and prior to explosive decompression, a hemicellulose degradation stream containing solubilized degradation byproducts of hemicellulose created in the exposing step, wherein acetic acid in the first vapor stream is collected, or acetic acid in the first vapor stream and in the hemicellulose degradation stream is collected;
   d) rapidly releasing the reaction pressure after the extracting step to afford explosive decompression of the prehydrolyzed lignocellulosic biomass into fibrous solids, vapor and condensate;
   e) collecting the vapor and condensate from the explosive decompression for separation and recovery of byproducts; and
   f) refining the hemicellulose degradation stream by vacuum evaporation, solvent extraction, adsorption, or ion-exchange precipitation to increase the concentration and to simultaneously remove volatile compounds and acid catalysts.

2. The process of claim 1, wherein the preselected temperature is 170 °C to 205 °C.

3. The process of claim 1, wherein the exposing step is carried out at the reaction temperature of 170 °C, the reaction pressure of 689 kPa (100 psig), and for the time interval of 25-85 minutes.

4. The process of claim 1, wherein the Severity Index is maintained at 3.6.

5. The process of claim 1 wherein a Severity Index of 3.8 to 4.1 is maintained during the exposing step.

6. The process of claim 5 wherein the Severity Index is maintained at 4.0.

7. The process of claim 6, wherein the exposing step is carried out at the reaction temperature of 205 °C, the reaction pressure of 1620 kPa (235 psig), and for the time interval of 8 minutes.

8. The process of claim 1, wherein the process is carried out in a pretreatment exposing system and volatile compounds are removed continuously by venting the pretreatment exposing system.

9. The process of claim 1, wherein solubilized byproducts of hemicellulose degradation created in the exposing step are extracted and removed from the solid portion both before and after explosive decompression, with or without the addition of an eluent.

10. The process of claim 1, wherein the lignocellulosic biomass is pre-steamed prior to the exposing step with steam for 10 to 60 min at a temperature of up to 99 Celsius to remove air and adjust a moisture content of the lignocellulosic biomass to between 30 and 60%.

11. The process of claim 1, wherein the lignocellulosic biomass is selected from the group consisting of miscanthus, switchgrass, corn cob, prairie grass, sorghum straw, corn stover, and wheat straw.

**Patentansprüche**

1. Kontinuierliches Verfahren zur Fraktionierung von Lignocellulose-Biomasse, die einen Ligningehalt von weniger als 12% hat, umfassend die Schritte:

   a) Exponieren der Lignocellulose-Biomasse mit Dampf und einem Säurekatalysator in einem Reaktionsgefäß bei einer vorausgewählten Temperatur und einem vorausgewählten Reaktionsdruck für eine vorausgewählte Expositionszeit und bei einem ausgewählten pH-Wert zum Entfernen einer Hemicellulose-Fraktion der Lignocellulose-Biomasse und Aktivieren einer Cellulose-Fraktion der Lignocellulose-Biomasse, um eine vorhydrolysierte Lignocellulose-Biomasse zu erhalten;
   wobei der pH-Wert durch Verwenden eines Säurekatalysators eingestellt wird,
   wobei der Säurekatalysator ganz oder teilweise Essigsäure ist, die durch die Aufspaltung der Hemicellulose-Fraktion der Lignocellulose-Biomasse freigesetzt wird,
   wobei ein Heftigkeitsgrad von 3,5 bis 4,0 während des exponierenden Schritts gehalten wird, wobei der Heftigkeitsgrad gemäß der Gleichung Log Heftigkeitsgrad = Log [Exp{(Temperatur °C - 100)/14,75} x Verweilzeit (min)] berechnet wird, und wobei die Dampfvorbehandlung für weniger als 90 Minuten bei einem pH-Wert von 3,0 bis 4,0 durchgeführt wird;
   b) Reinigen des flüssigen Kondensats und des Dampfes, die während des Expositionsschritts erzeugt wurden, um einen ersten Flüssigkeitsstrom mit wasserlöslichen Verbindungen und einen ersten Dampfstrom mit flüchtigen Chemikalien zu entfernen und zu sammeln;
   c) Extrahieren und Entfernen eines Hemicellulose-Abbaustroms, der gelöste Abbau-Nebenprodukte der Hemicellulose, die in dem exponierenden Schritt erzeugt wurden, enthält, unter Druck und vor der explosiven Dekompression aus der vorhydrolysierten Lignocellulose-Biomasse, wobei Essigsäure in dem ersten Dampfstrom gesammelt wird oder Essigsäure in dem ersten Dampfstrom und in dem Hemicellulose-Abbaustrom gesammelt wird;
   d) schnelles Entlasten des Reaktionsdrucks nach dem Extraktionsschritt, um eine explosive Dekompression der vorhydrolysierten Lignocellulose-Biomasse in faserige Feststoffe, Dampf und Kondensat zu ermöglichen;
   e) Sammeln des Dampfes und des Kondensats aus der explosiven Dekompression zur Trennung und Wiedergewinnung der Nebenprodukte; und
   f) Raffinieren des Hemicellulose-Abbaustroms durch Vakuumverdampfung, Lösungsmittelextraktion, Adsorption oder Ionenaustauschfällung, um die Konzentration zu erhöhen und um flüchtige Verbindungen und Säurekatalysatoren gleichzeitig zu entfernen.

2. Verfahren nach Anspruch 1, wobei die vorausgewählte Temperatur 170 °C bis 205 °C ist.

3. Verfahren nach Anspruch 1, wobei der exponierende Schritt bei der Reaktionstemperatur von 170 °C, dem Reaktionsdruck von 689 kPa (100 psig) und für das Zeitintervall von 25 bis 85 Minuten durchgeführt wird.

4. Verfahren nach Anspruch 1, wobei der Heftigkeitsgrad bei 3,6 gehalten wird.

5. Verfahren nach Anspruch 1, wobei ein Heftigkeitsgrad von 3,8 bis 4,1 während des exponierenden Schritts gehalten wird.

6. Verfahren nach Anspruch 5, wobei der Heftigkeitsgrad bei 4,0 gehalten wird.

7. Verfahren nach Anspruch 6, wobei der exponierende Schritt bei der Reaktionstemperatur von 205 °C, dem Reaktionsdruck von 1620 kPa (235 psig) und für das Zeitintervall von 8 Minuten durchgeführt wird.

8. Verfahren nach Anspruch 1, wobei das Verfahren in einem exponierenden Vorbehandlungssystem durchgeführt wird und flüchtige Verbindungen kontinuierlich durch Belüften des exponierenden Vorbehandlungssystems entfernt werden.

9. Verfahren nach Anspruch 1, wobei gelöste Nebenprodukte des Hemicellulose-Abbaus, die in dem exponierenden Schritt erzeugt wurden, aus dem festen Anteil extrahiert und entfernt werden, beides vor und nach der explosiven Dekompression mit oder ohne die Zugabe eines Eluierungsmittels.

10. Verfahren nach Anspruch 1, wobei die Lignocellulose-Biomasse vor dem exponierenden Schritt mit Dampf für 10 bis 60 Minuten bei einer Temperatur von bis zu 99 Celsius vorbedampft wird, um Luft zu entfernen und einen Feuchtigkeitsgehalt der Lignocellulose-Biomasse auf zwischen 30 und 60% einzustellen.

**11.** Verfahren nach Anspruch 1, wobei die Lignocellulose-Biomasse aus der Gruppe bestehend aus Miscanthus, Rutenhirse, Maisspindel, Präriegras, Sorghumhirsestroh, Maisstroh und Weizenstroh ausgewählt ist.

## Revendications

**1.** Procédé de fractionnement en continu de biomasse lignocellulosique ayant une teneur en lignine inférieure à 12%, le procédé comprenant les étapes suivantes:

a) exposition de la biomasse lignocellulosique à la vapeur et à un catalyseur acide dans un récipient de réaction à température et pression de réaction présélectionnées pendant une durée d'exposition prédéfinie, et à une valeur pH sélectionnée, pour retirer une fraction hémicellulosique de la biomasse et activer une fraction cellulosique de la biomasse lignocellulosique, afin d'obtenir une biomasse lignocellulosique préhydrolysée, procédé, dans lequel la valeur pH est ajustée au moyen d'un catalyseur acide, le catalyseur acide est entièrement ou partiellement de l'acide acétique libéré lors de la dégradation de la fraction hémicellulosique de la biomasse lignocellulosique, un indice de sévérité de 3,5 à 4,0 est maintenu au cours de l'étape d'exposition, l'indice de sévérité étant calculé selon l'équation : Log Indice de Sévérité = Log [Exp{(Température °C - 100)/14,75} x Temps de séjour (min], et le prétraitement à la vapeur est exécuté pendant moins de 90 min à une valeur pH de 3,0 à 4,0,
b) évacuation de condensat liquide et de vapeur générés au cours de l'étape d'exposition pour retirer et collecter un premier écoulement de liquide avec des composés hydrosolubles et un premier écoulement de vapeur avec des produits chimiques volatiles,
c) extraction et retrait de la biomasse lignocellulosique préhydrolysée, sous pression et préalablement à une décompression explosive, d'un écoulement d'hémicellulose dégradée contenant des sous-produits solubilisés de la dégradation d'hémicellulose créés au cours de l'étape d'exposition, l'acide acétique étant collecté dans le premier écoulement de vapeur, ou l'acide acétique étant collecté dans le premier écoulement de vapeur et dans l'écoulement d'hémicellulose dégradée,
d) relâchement rapide de la pression de réaction après l'étape d'extraction, afin de permettre la décompression explosive de la biomasse lignocellulosique préhydrolysée en solides fibreux, vapeur et condensat,
e) collecte de vapeur et de condensat de la décompression explosive, afin de séparer et récupérer les sous-produits, et
f) affinage de l'écoulement d'hémicellulose dégradée par évaporation sous vide, extraction par solvant, absorption, échange d'ions par précipitation pour augmenter la concentration et retirer simultanément des composés volatiles et catalyseurs acides.

**2.** Procédé suivant la revendication 1, dans lequel la température présélectionnée est de 170°C à 205°C.

**3.** Procédé suivant la revendication 1, dans lequel l'étape d'exposition est exécutée à une température de réaction de 170°C, une pression de réaction de 689 kPa (100 psig), et dans un intervalle de temps de 25 à 85 minutes.

**4.** Procédé suivant la revendication 1, dans lequel l'indice de sévérité est maintenu à 3,6.

**5.** Procédé suivant la revendication 1, dans lequel un indice de sévérité de 3,8 à 4,1 est maintenu pendant l'étape d'exposition.

**6.** Procédé suivant la revendication 5, dans lequel l'indice de sévérité est maintenu à 4,0.

**7.** Procédé suivant la revendication 6, dans lequel l'étape d'exposition est exécutée à la température de réaction de 205°C, à la pression de réaction de 1620 kPa (235 psig) et pendant un intervalle de temps de 8 minutes.

**8.** Procédé suivant la revendication 1, dans lequel le procédé est exécuté dans un système d'exposition de prétraitement et des composés volatiles sont retirés continuellement par ventilation du système d'exposition de prétraitement.

**9.** Procédé suivant la revendication 1, dans lequel des sous-produits solubilisés de la dégradation d'hémicellulose créés au cours de l'étape d'exposition sont extraits et retirés de la portion solide préalablement et ultérieurement à la décompression explosive, avec ou sans ajout d'un éluant.

**10.** Procédé suivant la revendication 1, dans lequel la biomasse lignocellulosique est prétraitée à la vapeur préalablement à l'étape d'exposition, pendant 10 à 60 minutes, à une température jusqu'à 99° Celsius, pour retirer l'air et ajuster l'humidité de la biomasse lignocellulosique à une teneur comprise entre 30 et 60%.

**11.** Procédé suivant la revendication 1, dans lequel la biomasse lignocellulosique est sélectionnée parmi le groupe constitué de miscanthus, panic raide, épis de maïs, graminées de prairie, paille de sorgho, cannes de maïs et paille de blé.

Figure 1

**Figure 2**

Figure 3

**Figure 4**

**Figure 5**

**Figure 6**

**Figure 7**

**Figure 8**

Figure 9

**Figure 10**

**Figure 11**

FIGURE 12

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- WO 0214598 A
- US 2002195213 A1, Izumi
- CN 1364911 A

### Non-patent literature cited in the description

- **SHAPOURI H et al.** Estimating the net energy balance of corn ethanol. *USDA Report 721,* 1995
- **SHAPOURI H et al.** The Energy Balance of corn ethanol: an update. *USDA Report 813,* 2002
- **CHOW J et al.** Energy resources and global development. *Science,* 2003, vol. 302, 1528-1531
- **WALD ML ; BARRIONUEVO A.** *The Energy challenge: A Renewed push for ethanol, without the corn,* 07 April 2007
- **GREEG D.** Commercializing cellulosic ethanol. *Biocycle,* 2008, vol. 49, 11-47
- **HILL J et al.** Environmental, economic, and energetic costs and benefits of biodiesel and ethanol biofuels. *Proc. Natl. Acad. Sci. USA,* 2006, vol. 103, 11206-11210
- **FARRELL AE et al.** Ethanol can contribute to energy and environmental goals. *Science,* 2006, vol. 311, 506-508
- **SOMERVILLE C.** Biofuels. *Current biology,* 2007, vol. 17, 115-119
- **SCHUETZLE D et al.** Alcohol fuels from biomass-Assessment of production technologies. Western Governers' Association, 2007
- **CHUM L ; OVEREND R.** Biomass and renewable fuels. *Fuel Processing technology,* 2002, vol. 71, 187-195
- **WYMAN CE.** Handbook on bioethanol: production and utilization. Taylor & Francis, 1996
- **DELMER DP ; AMOR Y.** Cellulose biosynthesis. *Plant Cell,* 1995, vol. 7, 987-1000
- Chemical characterization of wood and its components. **MOROHOSHI N.** In Wood and cellulosic chemistry. Marcel Dekker, Inc, 1991
- **HA MA et al.** Fine structure in cellulose microfibrils: NMR evidence from onion and quince. *Plant J. 1998,* 1998, vol. 16, 183-190
- **PALMQVIST E ; HAHN-HAGERDAL B.** Fermentation of lignocellulosic hydrolysates. II: Inhibitors and mechanisms of inhibition. *Bioresource Technol.,* 2000, vol. 74, 25-33
- **DE VRIJE T et al.** Pretreatment of miscanthus for hydrogen production by thermotoga elfii. *International journal of hydrogen energy,* 2002, vol. 27, 1381-1390
- **GALBE M ; ZACCHI G.** A review of the production of ethanol from softwood. *Appl Microbiol Biotechnol,* 2002, vol. 59, 618-628
- **TORGET R et al.** Dilute sulfuric acid pretreatment of hardwood bark. *Bioresource Technol.,* 1991, vol. 35, 239-246
- **DONGHAI S et al.** Effects of different pretreatment modes on the enzymatic digestibility of corn leaf and corn stalk. *Chinese J. Chem. Eng.,* 2006, vol. 14, 796-801
- *Renewable Fuels for advanced Powertrains-Final report,* 2008, www.renew-fuel.com/download.php?dl=renew-final-report-080627.pdf&kat=5
- Estimating the energy requirement and CO2 emission from production of the perennial grasses miscanthus, switchgears and reed canary grass. **BULLARD M ; METCALFE P.** ETSU B/U1/00645/REP DTI/Pub URN 01/797. Crown publisher, 2001
- Miscanthus- Practical aspects of biofuel development. **NEWMAN R.** ETSU B/W2/00618/REP-URN 03/1568. Crown publisher, 2003
- Miscanthus for energy and fibre. **CHRISTIAN DG ; HAASE E.** Agronomy of Miscanthus. James and James, 2001
- **PLANTING ; GROWING MISCANTHUS.** *Department for Environment, Food and Rural Affairs (Defra),* 2007, http://www.defra.gov.uk/erdp/pdfs/ecs/miscanthus-guide.pdf
- **PAPATHEOFANOUS MG et al.** Biorefining of agricultural crops and residues: effect of pilot-plant fractionation on properties of fibrous fractions. *Biomass and Bioenergy,* 1995, vol. 8, 419-426
- **LANGE W.** Extracts of miscanthus grass (Miscanthus sinensis Anderss.). A comparison of the 'summer-green' and the 'winter-dry' plant. *Holzforschung,* 1992, vol. 46, 277-282

- **SIMS, R.** Biomass and resources bioenergy options for a cleaner environment in developed and developing countries. Elsevier Science, 2003
- **SJÖSTRÖM, E.** Wood chemistry: fundamentals and applications. Academic Press, 1993
- **PRICE L et al.** Identifying the yield potential of Miscanthus x giganteus: an assessment of the spatial and temporal variability of M. x giganteus biomass productivity across England and Wales. *Biomass and Bioenergy,* 2004, 3-13
- **VELASQUEZ JA et al.** Binderless fiberboards from steam exploded Miscanthus sinensis. *Wood Science and Technology,* 2003, vol. 37, 269-278
- **LEWANDOWSKI I et al.** Environment and harvest time affects the combustion qualities of Miscanthus genotypes. *Agronomy J,* 2003, vol. 95, 1274-1280
- **KURAKAKE M et al.** Pretreatment with ammonia water for enzymatic hydrolysis of corn husk, bagasse, and switchgrass. *Applied biochemistry and Biotechnology,* 2001, vol. 90, 251-259
- **LEWANDOWSKI I et al.** Development and current status of perennial rhizomatous grasses as energy crops in the US and Europe. *Biomass and Bioenergy,* 2003, vol. 25, 335-361
- **SUN Y ; CHENG J.** Hydrolysis of lignocellulosic materials for ethanol production :A review. *Bioresources Technol.,* 2002, vol. 83, 1-11
- Pretreatment of lignocellulosic biomass. **MCMILLAN JD.** In Enzymatic Conversion of Biomass for Fuels Production. ACS, 1994, 292-324
- **FAN L et al.** The nature of lignocellulosics and their pretreatments for enzymatic hydrolysis. *Adv. Biochem. Eng. Biotechnol.,* 1982, vol. 23, 158-183
- **MOSIER N et al.** Features of promising technologies for pretreatment of lignocellulosic biomass. *Bioresources Technol,* 2005, vol. 96, 673-686
- **HENLEY RG et al.** Enzymatic saccharification of cellulose in membrane reactors. *Enzyme Microb. Tech.,* 1980, vol. 2, 206-208
- **BERLIN A et al.** Inhibition of cellulase, xylanase and beta-glucosidase activities by softwood lignin preparations. *J. Biotechnol.,* 2006, vol. 125, 198-209
- **CHANDRA R et al.** Substrate pretreatment: The key to effective enzymatic hydrolysis of lignocellulosics?. *Adv. Biochem. Eng. Biotechnol,* 2007, vol. 108, 67-93
- **KASSIM EA ; EL-SHAHED AS.** Enzymatic and chemical hydrolysis of certain cellulosic materials. *Agr. Wastes,* 1986, vol. 17, 229-233
- **XU Z et al.** Enzymatic hydrolysis of pretreated soybean straw. *Biomass Bioenerg. 2007,* 2007, vol. 31, 162-167
- **VACCARINO C et al.** Effect of SO2NaOH and Na2CO3 pretreatments on the degradability and cellulase digestibility of grape marc. *Biol. Waste,* 1987, vol. 20, 79-88
- **SILVERSTEIN RA et al.** A comparison of chemical pretreatment methods for improving saccharification of cotton stalks. *Bioresource Technol,* 2007, vol. 98, 3000-3011
- **ZHAO X et al.** Comparative study on chemical pretreatment methods for improving enzymatic digestibility of crofton weed stem. *Bioresource Technol.,* 2007, vol. 99, 3729-3736
- **GASPAR M et al.** Corn fiber as a raw material for hemicellulose and ethanol production. *Process Biochem.,* 2007, 2007, vol. 42, 1135-1139
- **SAHA BC ; COTTA MA.** Ethanol production from alkaline peroxide pretreated enzymatically saccharified wheat straw. *Biotechnol. Progr.,* 2006, vol. 22, 449-453
- **SAHA BC ; COTTA MA.** Enzymatic saccharification and fermentation of alkaline peroxide pretreated rice hulls to ethanol. *Enzyme Microb. Tech.,* 2007, vol. 41, 528-532
- **MISHIMA D et al.** Comparative study on chemical pretreatments to accelerate enzymatic hydrolysis of aquatic macrophyte biomass used in water purification processes. *Bioresource Technol. 2006,* 2006, vol. 97, 2166-2172
- **SUN XF et al.** Characteristics of degraded cellulose obtained from steam-exploded wheat straw. *Carbohyd. Res.,* 2005, vol. 340, 97-106
- **ALIZADEH H et al.** Pretreatment of switchgrass by ammonia fiber explosion (AFEX). *Appl. Biochem. Biotechnol.,* 2005, vol. 124, 1133-41
- **CHUNDAWAT SP et al.** Effect of particle size based separation of milled corn stover on AFEX pretreatment and enzymatic digestibility. *Biotechnol. Bioeng.,* 2007, vol. 96, 219-231
- **EGGEMAN T ; ELANDER RT.** Process and economic analysis of pretreatment technologies. *Bioresource Technol.,* 2005, vol. 96, 2019-2025
- **CHUM HL.** Evaluation of pretreatments of biomass for enzymatic hydrolysis of cellulose. Solar Energy Research Institute, 1985, 1-64
- **TAHERZADEH MJ ; KARIMI K.** Process for ethanol from lignocellulosic materials I: Acid-based hydrolysis processes. *Bioressources,* 2007, vol. 2, 472-499
- **RUIZ E et al.** Evaluation of steam explosion pretreatment for enzymatic hydrolysis of sunflower stalks. *Enzyme Microb. Tech.,* 2008, vol. 42, 160-166
- **BALLESTEROS M et al.** Ethanol from lignocellulosic materials by a simultaneous saccharification and fermentation process (SFS) with Kluyveromyces marxianus CECT 10875. *Process Biochem.,* 2004, vol. 39, 1843-1848

- **NEGRO MJ et al.** Hydrothermal pretreatment conditions to enhance ethanol production from poplar biomass. *Appl. Biochem. Biotechnol.,* 2003, vol. 105, 87-100
- **KURABI A et al.** Enzymatic hydrolysis of steam exploded and ethanol organosolv-pretreated Douglas-firby novel and commercial fungal cellulases. *Appl. Biochem. Biotechnol.,* 2005, 121-124
- **VARGA E et al.** Optimization of steam pretreatment of corn stover to enhance enzymatic digestibility. *Appl. Biochem. Biotechnol.,* 2004, 509-523
- **EKLUND R.** The influence of SO2 and H2SO4 impregnation of willow prior to steam pretreatment. *Bioresource Technol.,* 1995, vol. 52, 225-229
- **YANG B ; WYMAN CE.** Effect of xylan and lignin removal by batch and flowthrough pretreatment on the enzymatic digestibility of corn stover cellulose. *Biotechnol. Bioeng,* 2004, vol. 86, 88-95
- **GIRIO FMF.** Development of xylooligosaccharides and xylitol for use in pharmaceutical and food industries (Xylophone). *FAIR-CT97-3811,* 1997
- **KABEL MA et al.** Hydrothermally treated xylan rich by-products yield different classes of xylo-oligosaccharides. *Carbohydrate Polymers,* 2002, vol. 50, 47-56

- **WERPY T ; PETERSEN G.** Results of screening for potential candidates from sugars and synthesis gas. *DOE - Top Value Added Chemicals from Biomass,* 2004, vol. I, http://www1.eere.energy.gov/biomass/pdfs/35523.pdf
- **CARVALHEIRO F et al.** Hemicellulsoe biorefineries: a review on biomass pretreatments. *Journal of Scientific & Industrial Research,* 2008, vol. 67, 849-864
- **EBRINGEROVA A.** Structural diversity and application potential of hemicelluloses. *Macromolecular Symposia,* 2006, vol. 232, 1-12
- **GREGG D.** Commercializing cellulosic ethanol. *Biocycle,* 2008, vol. 49, 11-47
- **SILVERSTEIN RA et al.** A comparison of chemical pretreatment methods for improving saccharification of cotton stalks. *Bioresource Technol,. 2007,* 2007, vol. 98, 3000-3011
- **KURABI A et al.** Enzymatic hydrolysis of steam exploded and ethanol organosolv-pretreated Douglas-firby novel and commercial fungal cellulases. *Biochem. Biotechnol.,* 2005, 121-124
- **VAZQUEZ M et al.** Enhancing the potential of oligosaccharides from corncob autohydrolysis as prebiotic food ingredients. *Industrial Crops and Products,* 2006, vol. 24, 152-159
- **MOURA P et al.** IN vitro fermentation of xylooligosaccharides from corncobs autohydrolysis by Bifidobacterium and Lactobacuillus strains. *LWT,* 2007, vol. 40, 963-972